(19) Europäisches Patentamt
European Patent Office
Office européen des brevets

(11) EP 2 141 210 A1

(12) # EUROPEAN PATENT APPLICATION
published in accordance with Art. 153(4) EPC

(43) Date of publication:
**06.01.2010 Bulletin 2010/01**

(21) Application number: **08740446.3**

(22) Date of filing: **15.04.2008**

(51) Int Cl.:
***C09J 4/02*** *(2006.01)* ***B29C 65/50*** *(2006.01)*
***B32B 27/00*** *(2006.01)* ***C09J 5/00*** *(2006.01)*
***C09J 7/02*** *(2006.01)* ***C09J 11/06*** *(2006.01)*

(86) International application number:
**PCT/JP2008/057360**

(87) International publication number:
**WO 2008/133117 (06.11.2008 Gazette 2008/45)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.04.2007 JP 2007112412**

(71) Applicant: **Nitto Denko Corporation**
**Ibaraki-shi, Osaka 567-8680 (JP)**

(72) Inventors:
- **OKAMOTO, Masayuki**
  **Ibaraki-shi**
  **Osaka 567-8680 (JP)**
- **SHIRAI, Mitsuyoshi**
  **Ibaraki-shi**
  **Osaka 567-8680 (JP)**
- **UESUGI, Masanori**
  **Ibaraki-shi**
  **Osaka 567-8680 (JP)**
- **KONDOU, Takashi**
  **Ibaraki-shi**
  **Osaka 567-8680 (JP)**
- **NIWA, Masahito**
  **Ibaraki-shi**
  **Osaka 567-8680 (JP)**
- **INOKUCHI, Shinji**
  **Ibaraki-shi**
  **Osaka 567-8680 (JP)**

(74) Representative: **Grünecker, Kinkeldey, Stockmair & Schwanhäusser**
**Anwaltssozietät**
**Leopoldstrasse 4**
**80802 München (DE)**

(54) **ACRYLIC ADHESIVE COMPOSITION, ACRYLIC ADHESIVE SHEET, AND METHOD FOR BONDING THE ADHESIVE SHEET TO COATED SURFACE OF AUTOMOBILE**

(57) Disclosed is an acrylic pressure-sensitive adhesive composition that gives a pressure-sensitive adhesive layer exhibiting superior adhesiveness even to coatings, which are likely to cause low adhesion due to bleeding typically of a surface conditioner, without requiring, for example, washing process.

The acrylic pressure-sensitive adhesive composition contains a vinyl monomer or a partial polymer thereof (a); and a (meth)acrylate co-oligomer (b), in which the vinyl monomer contains, as a main component, an alkyl (meth)acrylate monomer (a1) having an alkyl group with 2 to 14 carbon atoms, and the (meth)acrylate co-oligomer (b) has a weight-average molecular weight of from 1000 to 30000 and contains, as monomer components, 96 to 99.5 percent by weight of an alkyl (meth)acrylate (b1) and 0.1 to 4 percent by weight of a (meth)acryloyl group-containing silicone oil (b2).

EP 2 141 210 A1

## Description

### Technical Field

The present invention relates to an acrylic pressure-sensitive adhesive composition. Specifically, it relates to a pressure-sensitive adhesive composition that is curable by the action of an active energy ray and is used typically as a pressure-sensitive adhesive layer of a pressure-sensitive adhesive sheet to be applied to automotive coatings. It also relates to an acrylic pressure-sensitive adhesive sheet using the pressure-sensitive adhesive composition; and to methods for bonding the pressure-sensitive adhesive sheet to an automotive coating.

### Background Art

A pressure-sensitive adhesive tape or sheet (hereinafter, a "tape or sheet" is simply generically referred to as a "sheet") having a foam base has been used for affixing components such as moldings and plates to automobiles, as exterior cladding of automobiles or for the protection or decoration of automobile bodies. An exemplary pressure-sensitive adhesive sheet to be applied to such an automotive coating is a foam-backed pressure-sensitive adhesive tape which includes a pressure-sensitive adhesive layer and, dispersed therein, glass microbubbles (hollow microparticles) and thereby excels in bond strength and shear strength (see Patent Document 1). The foam-backed pressure-sensitive adhesive tape, however, shows insufficient adhesiveness although it has high shear strength.

As possible solutions to the adhesiveness problem, for example, Patent Document 2 discloses a pressure-sensitive adhesive composition; and Patent Document 3 discloses a pressure-sensitive double-faced adhesive tape. The former pressure-sensitive adhesive composition contains substantially no solvent and includes a pressure-sensitive adhesive polymer containing a (meth)acrylate constitutional unit as a main constitutional unit and having a weight-average molecular weight of 50000 or more; a tackifier resin having a weight-average molecular weight of 20000 or less; and monomers mainly containing a (meth)acrylate. The latter pressure-sensitive double-faced adhesive tape includes a photo-curable pressure-sensitive adhesive and a base layer, in which the photo-curable pressure-sensitive adhesive mainly contains an acrylic polymer having a photoactivatable functional group, and the base layer contains inorganic hollow particles.

However, changes have been recently made to materials for adherend automotive coatings to which the pressure-sensitive adhesive tapes or sheets are adhered. Specifically, acrylic-melamine crosslinked materials have been generally used as automotive paints. The acrylic-melamine crosslinked paints, however, are susceptible to acid rain, because the triazine ring of the melamine resin is hydrolyzed by the action of the acid rain to cause a stain. To avoid this problem caused by acid rain, acrylic paints containing no or a less amount of melamine resin have been used (see Patent Document 4). Independently, large amounts of silicone surface conditioners have been used in automotive paints, because aqueous under coaters have been employed instead of solvent-based under coaters so as to meet environmental challenges, and repelling or cissing between the aqueous under coaters and the paints to be applied thereon should be avoided (see Patent Documents 5 and 6). A surface formed by the acid-rain-resistant paint often shows a lower adhesiveness than that of the known acrylic-melamine crosslinked paints. The silicone surface conditioners also invite an insufficient adhesive strength, because a substance having a low surface tension, such as silicone, is present on the surface of the coating to thereby reduce the wettability with the pressure-sensitive adhesive sheet. This tendency is remarkable when the surface conditioner is used in a large amount.

Specifically, there has not yet been obtained a pressure-sensitive adhesive sheet that can exhibit a sufficient adhesive strength to such acid-rain-resistant automotive coatings recently newly employed.

Patent Document 1: Japanese Examined Patent Application Publication (JP-B) No. S57-17030
Patent Document 2: Japanese Unexamined Patent Application Publication (JP-A) No. 2001-49200
Patent Document 3: JP-A No. 2000-248241
Patent Document 4: JP-A No. H06-108001
Patent Document 5: JP-A No. 2002-241698
Patent Document 6: JP-A No. 2003-226834

### Disclosure of Invention

### Problems to be Solved by the Invention

Accordingly, an object of the present invention is to provide an acrylic pressure-sensitive adhesive composition which can form a pressure-sensitive adhesive layer. The resulting pressure-sensitive adhesive layer exhibits a high

adhesive strength even to an acid-rain-resistant coating and exhibits a satisfactory adhesive strength even to a coating to which surface a silicone surface conditioner bleeds out. Another object of the present invention is to provide an acrylic pressure-sensitive adhesive sheet using the pressure-sensitive adhesive composition; and a method for bonding the sheet to an automotive coating.

Means for Solving the Problems

After intensive investigations to achieve the objects, the present inventors have found that the above problems can be solved by a specific acrylic pressure-sensitive adhesive and a pressure-sensitive adhesive sheet using the pressure-sensitive adhesive. The acrylic pressure-sensitive adhesive comprises a monomer mixture and/or a partial polymer thereof and a co-oligomer. The monomer mixture mainly contains a specific alkyl (meth)acrylate. The co-oligomer contains, as monomer components, an alkyl (meth)acrylate and a (meth)acryloyl-containing silicone oil. After further investigations, the present inventors have found that the pressure-sensitive adhesive sheet is especially effective to specific automotive coatings. The present invention has been made based on these findings.

Specifically, the present invention provides an acrylic pressure-sensitive adhesive composition containing a vinyl monomer or a partial polymer thereof (a); and a (meth)acrylate co-oligomer (b), in which the vinyl monomer contains, as a main component, an alkyl (meth)acrylate monomer (a1) having an alkyl group with 2 to 14 carbon atoms, and the (meth)acrylate co-oligomer (b) has a weight-average molecular weight of from 1000 to 30000 and contains, as monomer components, 96 to 99.5 percent by weight of an alkyl (meth)acrylate (b1) and 0.1 to 4 percent by weight of a (meth) acryloyl group-containing silicone oil (b2).

The acrylic pressure-sensitive adhesive composition may contain 5 to 40 parts by weight of the (meth)acrylate co-oligomer (b) per 100 parts by weight of the vinyl monomer or a partial polymer thereof (a).

In the acrylic pressure-sensitive adhesive composition, the (meth)acrylate co-oligomer (b) may have a glass transition temperature (Tg) of from 40°C to 150°C.

The acrylic pressure-sensitive adhesive composition may further contain 0.001 to 5 parts by weight of a photoinitiator (c) per 100 parts by weight of the vinyl monomer or a partial polymer thereof (a) and may be curable by the action of an active energy ray.

The acrylic pressure-sensitive adhesive composition may further contain 0.001 to 30 parts by weight of a multifunctional (meth)acrylate (d) per 100 parts by weight of the vinyl monomer or a partial polymer thereof (a).

The present invention further provides an acrylic pressure-sensitive adhesive sheet which comprises an elastic layer (X); and, arranged on or above at least one side thereof, an acrylic pressure-sensitive adhesive layer (Y), in which the elastic layer (X) contains hollow microspheres, and the acrylic pressure-sensitive adhesive layer (Y) is made from the acrylic pressure-sensitive adhesive composition.

In the acrylic pressure-sensitive adhesive sheet, the acrylic pressure-sensitive adhesive layer (Y) may be a cured product of the acrylic pressure-sensitive adhesive composition cured by the action of an active energy ray.

The acrylic pressure-sensitive adhesive sheet may be applied to an automotive coating.

In another embodiment, the present invention provides a method for bonding a pressure-sensitive adhesive sheet to an automotive coating. The method includes the step of applying the acrylic pressure-sensitive adhesive sheet for automotive coating to a surface of the automotive coating in which a silicone surface conditioner bleeds out to the surface.

In yet another embodiment, the present invention provides a method for uniting an article to an automotive coating. The method includes the step of affixing the article to a surface of the automotive coating through the acrylic pressure-sensitive adhesive sheet for automotive coating, wherein a silicone surface conditioner bleeds out to the surface.

The present invention further provides a method for bonding a pressure-sensitive adhesive sheet to an automotive coating. The method includes the step of affixing the acrylic pressure-sensitive adhesive sheet to a surface of the automotive coating, in which the surface has an elemental ratio of silicon of from 1% to 20% as determined by electron spectroscopy for chemical analysis (ESCA).

In addition, the present invention provides a method for uniting an article to an automotive coating. The method includes the step of affixing the article to a surface of the automotive coating through the acrylic pressure-sensitive adhesive sheet for automotive coating, in which the surface has an elemental ratio of silicon of from 1% to 20% as analyzed through electron spectroscopy for chemical analysis (ESCA).

Advantages

The acrylic pressure-sensitive adhesive composition according to the present invention has the above configuration and can thereby form a pressure-sensitive adhesive layer that exhibits a superior adhesive strength even to acid-rain-resistant coatings, especially, to hard-to-adhere coatings such as coatings containing large amounts of silicone surface conditioners. A pressure-sensitive adhesive sheet using the pressure-sensitive adhesive composition in its

pressure-sensitive adhesive layer therefore exhibits superior characteristic properties and is free from problems such as separation during use, even when it is used typically to the hard-to-adhere automotive coatings.

Best Modes for Carrying Out the Invention

Acrylic pressure-sensitive adhesive compositions according to the present invention each contain a vinyl monomer or a partial polymer thereof (a) (hereinafter referred to as a "component (a)") and a (meth)acrylate co-oligomer (b) (hereinafter referred to as a "component (b)") as main constituents, in which the vinyl monomer contains, as a main component, an alkyl (meth)acrylate monomer (a1) having an alkyl group with 2 to 14 carbon atoms, and the (meth) acrylate co-oligomer (b) contains an alkyl (meth)acrylate (b1) and silicone oil (b2). The composition preferably further contains a photoinitiator (c) and/or a multifunctional (meth)acrylate (d) as a constituent, in addition to the above components. The composition may further contain other additive components. As used herein the term "(meth)acrylic" means "acrylic and/or methacrylic", and hereinafter the same.

As used herein a "main component" refers to a component that is contained in an amount of 50 percent by weight or more (50 to 100 percent by weight), and preferably 70 percent by weight or more, of the total weight of total components, unless otherwise specified.

Though not specifically limited, the acrylic pressure-sensitive adhesive composition is preferably curable by the action of an active energy ray and is more preferably curable by the action of an ultraviolet ray. When being ultraviolet-ray-curable, the composition does not require a solvent, is thereby environmental friendly, and can form a thick layer.

[Component (a): Vinyl Monomer and/or Polymer Thereof]

A component (a) for use in the acrylic pressure-sensitive adhesive composition is a pressure-sensitive adhesive component that mainly has the function of exhibiting tackiness and is a vinyl monomer or a partial polymer thereof. The vinyl monomer used as the component (a) contains an alkyl (meth)acrylate monomer (a1) having an alkyl group (including a cycloalkyl group) with 2 to 14 carbon atoms as a main component. The vinyl monomer may include one monomer (a1) alone, or a mixture of two or more monomers (a1), or a mixture of one or more monomers (a1) with one or more other copolymerizable monomers (a2). The component (a) may be a partial polymer prepared from the vinyl monomer mixture through prepolymerization. As used herein the term "partial polymer" means a partially polymerized product of a vinyl monomer mixture and refers to a polymer having a low degree of polymerization and containing a vinyl monomer as a monomer component, or refers to a mixture of an unreacted vinyl monomer and the polymer having a low degree of polymerization.

The alkyl (meth)acrylate monomer (a1) (hereinafter referred to as a "monomer (a1)") for use in the vinyl monomer is an alkyl (meth)acrylate having a linear, branched-chain, or cyclic alkyl group with 2 to 14 carbon atoms. The alkyl group (alkyl moiety) in the alkyl (meth)acrylate monomer preferably contains 3 to 10 carbon atoms, and more preferably contains 4 to 9 carbon atoms, for better balance among adhesive properties. Exemplary alkyl (meth)acrylate monomers (a1) include ethyl (meth)acrylates, n-propyl (meth)acrylates, isopropyl (meth)acrylates, n-butyl (meth)acrylates, sec-butyl (meth)acrylates, t-butyl (meth)acrylates, n-octyl (meth)acrylates, isooctyl (meth)acrylates, 2-ethylhexyl (meth)acrylates, isononyl (meth)acrylates, and dodecyl (meth)acrylates. Among them, the above-listed alkyl acrylates are preferred, of which 2-ethylhexyl acrylate, isooctyl acrylate, and n-butyl acrylate are more preferred, for better balance among adhesive properties. Each of different monomers (a1) can be used alone or in combination.

Exemplary copolymerizable monomers (a2) for use in the vinyl monomer herein include carboxyl-containing monomers such as acrylic acid, methacrylic acid, carboxyethyl acrylate, carboxypentyl acrylate, itaconic acid, maleic acid, and crotonic acid; hydroxyl-containing monomers such as 2-hydroxyethyl (meth)acrylates, 2-hydroxypropyl (meth) acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; acid anhydride monomers such as maleic anhydride and itaconic anhydride; sulfo-containing monomers such as 2-acrylamido-2-methylpropanesulfonic acid and sulfopropyl acrylate; phosphate-containing monomers such as 2-hydroxyethyl acryloylphosphate; amide monomers including (meth)acrylamides and N-substituted (meth)acrylamides such as N-methylolacrylamide; and succinimide monomers such as N-(meth)acryloyloxymethylenesuccinimides, N-(meth)acryloyl-6-oxyhexamethylenesuccinimides, and N-(meth)acryloyl-8-oxyoctamethylenesuccinimides. Exemplary copolymerizable monomers (a2) further include vinyl monomers such as vinyl acetate, N-vinylpyrrolidone, N-vinylcarboxylic acid amides, styrene, and N-vinylcaprolactam; cyanoacrylate monomers such as acrylonitrile and methacrylonitrile; acrylic ester monomers such as glycidyl (meth)acrylates, tetrahydrofurfuryl (meth)acrylates, polyethylene glycol (meth)acrylates, fluorine-containing (meth)acrylates, silicone (meth)acrylates, and 2-methoxyethyl acrylate; and alkyl (meth)acrylates containing an alkyl group differing from the alkyl groups with 2 to 14 carbon atoms of the alkyl (meth)acrylates (a1). Each of different copolymerizable monomers (a2) may be used alone or in combination.

Of such copolymerizable monomers (a2), hydroxyl-containing monomers and carboxyl-containing monomers

are preferred, and acrylic acid is especially preferred. Typically, acrylic acid is preferably used as a copolymerizable monomer (a2) in the component (a) in a ratio of the monomer (a1) to the copolymerizable monomer (a2) of from 90:10 to 99:1 (in terms of percent by weight). This will improve the adhesive strength.

The content of the monomer component (a1) in the component (a) for use herein may be 70 percent by weight or more. The ratio (percent by weight) of the monomer (a1) to the copolymerizable monomer (a2), if used, in the component (a) is from 70:30 to 99.9:0.1, preferably from 80:20 to 99.5:0.5, and more preferably from 90:10 to 99:1.

Typically when the viscosity of the acrylic pressure-sensitive adhesive composition is to be adjusted, the component (a) may be a partial polymer prepared from the vinyl monomer mixture through prepolymerization. Though not critical, the degree of polymerization of the polymer prepared from the vinyl monomer and contained in the partial polymer is preferably from 3 to 50, and more preferably from 5 to 30, for achieving a viscosity suitable for coating. The partial polymerization (prepolymerization) is generally performed by the application of an active energy ray while avoiding the contact with oxygen. Of such active energy rays, ultraviolet rays are preferably employed.

When the component (a) is a partial polymer of the vinyl monomer mixture, the conversion thereof is from about 2 to about 40 percent by weight, and preferably from about 5 to about 20 percent by weight, whereas such suitable conversion may vary depending typically on the molecular weight of the constituent polymer and is not especially limited. The conversion of the partial polymer is determined in the following manner. About 0.5 g of the partial polymer is sampled, precisely weighed, dried at 130°C for 2 hours, the dried sample is precisely weighed, whereby a weight loss [corresponding to a volatile content (weight of unreacted monomers)] is determined, and the determined weight loss is substituted in the following equation:

$$\text{Conversion (\%) of partial polymer} = [1-(\text{Weight loss})/(\text{Weight of partial polymer before drying})] \times 100$$

[Component (B): Co-oligomer of Alkyl (Meth)acrylate and Reactive Silicone Oil]

A component (b) for use in the acrylic pressure-sensitive adhesive composition is a co-oligomer which contains an alkyl (meth)acrylate (b1) and a silicone oil having a (meth)acryloyl group (b2) (hereinafter referred to as "(meth) acryloyl group-containing silicone oil (b2)") as essential monomer components. The component (b) may be a copolymer (co-oligomer) of an alkyl (meth)acrylate (b1) and a (meth)acryloyl group-containing silicone oil (b2) alone, or may be a co-oligomer further containing other copolymerizable component(s). Each of alkyl (meth)acrylates (b1) and each of (meth)acryloyl group-containing silicone oils (b2) may be used alone or in combination, respectively.

The alkyl (meth)acrylate (b1) for use in the component (b) is not especially limited and examples thereof are alkyl (meth)acrylates having a linear, branched-chain or cyclic alkyl group containing about 2 to about 14 carbon atoms. Among them, those having a relatively high glass transition temperature (Tg) as a homopolymer are preferred. Specifically, alkyl (meth)acrylates having a glass transition temperature (Tg) as a homopolymer ranging from 40°C to 150°C are preferred, and those having a glass transition temperature (Tg) as a homopolymer ranging from 60°C to 120°C are more preferred, for satisfactory balance among adhesive properties. Preferred examples of the alkyl (meth)acrylates (b1) include cyclohexyl methacrylate (Tg: 66°C), isobornyl methacrylate (Tg: 94°C), and t-butyl methacrylate (Tg: 107°C), of which cyclohexyl methacrylate is especially preferred.

The (meth)acryloyl group-containing silicone oil (b2) for use in the component (b) is a polyorganosiloxane having at least one (meth)acryloyl group per molecule. A base silicone polymer of the silicone oil has only to be a polysiloxane whose principal chain is constituted by siloxane bonds. Examples thereof include dimethylsilicone all of whose side chains and ends are methyl groups; methylphenylsilicone part of whose side chains contain phenyl groups; and methylhydrogensilicone part of whose side chains contain hydrogens. Among them, dimethylsilicone is preferred. The position of the at least one (meth)acryloyl group to be introduced to the polyorganosiloxane is not especially limited. Polyorganosiloxanes for use herein may have (meth)acryloyl group(s) at both ends of the principal chain (bi-terminal type), at one end of the principal chain (mono-terminal type), at side chain(s) (side-chain type), or at side chain(s) and one or both terminals (mono-terminal or bi-terminal type). Among such polyorganosiloxanes, preferred is a polyorganosiloxane having a (meth)acryloyl group at one terminal of the principal chain, because it is good in balance among adhesive properties and does not cause gelling during polymerization. The resulting silicone oil is represented typically by the following structural formula. The following silicone oil is a silicone oil containing a methacryloyl group at one terminal of its principal chain.

[Chemical Formula 1]

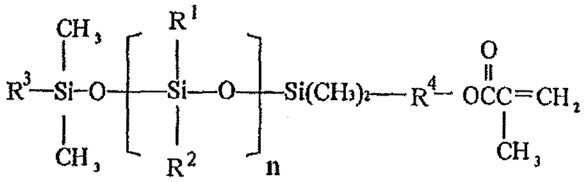

In the formula, each of $R^1$ and $R^2$ is hydrogen atom, methyl group, or phenyl group, and is preferably methyl group; each of $R^3$ and $R^4$ is a hydrocarbon group and may contain at least one of oxygen atoms, nitrogen atoms, and sulfur atoms; and "n" is an integer of 1 or more and is preferably an integer of 5 to 100.

Such (meth)acryloyl group-containing silicone oils (b2) for use herein are also commercially available, and examples of usable commercial products include products supplied under the trade names of "X-22-2426", X-22-174DX", and "X-22-2475" by Shin-Etsu Silicones (a division of Shin-Etsu Chemical Co., Ltd.); products supplied under the trade names of "SILAPLANE FM-0711, FM-0721, FM-0725, TM-0701, and TM-0701T" by Chisso Corporation; and products supplied under the trade names of "AK-5" and "AK-30" by Toagosei Co., Ltd.

For satisfactory adhesive properties, the content of the alkyl (meth)acrylate (b1) in the component (b) is preferably from 96 to 99.5 percent by weight, more preferably from 96 to 99 percent by weight, and furthermore preferably from 96 to 98 percent by weight, based on total monomer components in the component (b).

The content of the (meth)acryloyl group-containing silicone oil (b2) in the component (b) is preferably from 0.1 to 4 percent by weight, more preferably from 0.5 to 3.5 percent by weight, and furthermore preferably from 0.7 to 3 percent by weight, based on total monomer components in the component (b). The (meth)acryloyl group-containing silicone oil (b2), if present in a content of less than 0.1 percent by weight, may not contribute to advantages of the present invention, i.e., may not contribute to improvements in adhesive strength to hard-to-adhere surfaces. In contrast, the component (b2), if present in a content of more than 4 percent by weight, may impede development of satisfactory adhesive properties.

For satisfactory adhesive properties, the content of monomer components other than the alkyl (meth)acrylate (b1) and (meth)acryloyl group-containing silicone oil (b2) in the component (b) is preferably from 0 to 4 percent by weight, and more preferably from 0 to 3 percent by weight, based on total monomer components in the component (b).

As used herein the term "content(s)" of monomer components such as alkyl (meth)acrylate (b1) and (meth) acryloyl group-containing silicone oil (b2) in the component (b) refers to the proportion(s) of charged amounts of the monomer components (blending ratio) in the preparation of the component (b).

The weight-average molecular weight of the component (b) ranges from 1000 to 30000, preferably from 1500 to 20000, and more preferably from 2000 to 15000. The component (b), if having a weight-average molecular weight of less than 1000, may exhibit insufficient holding power and shear strength. In contrast, the component (b), if having a weight-average molecular weight of more than 30000, may show insufficient compatibility (miscibility) with the component (a).

The glass transition temperature (Tg) of the component (b) is preferably from 40°C to 150°C, more preferably from 50°C to 130°C, and furthermore preferably from 60°C to 120°C. The component (b), if having a glass transition temperature of lower than 40°C, may not contribute to development of satisfactory adhesive strength; and, if having a glass transition temperature of higher than 150°C, may not contribute to development of satisfactory tack.

As used herein the "glass transition temperature (Tg)" refers to a theoretical glass transition temperature Tg which is determined from the glass transition temperatures $Tg_i$ (i=1, 2, ..., i) of homopolymers corresponding to the monomers $M_i$ (i=1, 2, ..., i) used in the component (b), and the weight fractions $X_i$ (i=1, 2, ..., i) of the monomers in the (meth)acrylic oligomer, according to the equation: $1/Tg=\Sigma(X_i/Tg_i)$.

The component (b) is prepared by copolymerizing the monomer components. The polymerization can be performed according to a known or common process such as emulsion polymerization, suspension polymerization, solution polymerization, or bulk polymerization. Among them, solution polymerization is preferred for satisfactory workability and productivity. The solution polymerization enables easier control of temperature due to the relaxation effect of the solvent and thereby enables easier control of molecular weight, as compared to bulk polymerization and other processes. The solution polymerization uses organic solvents that can be relatively easily removed typically by drying. This is more advantageous than emulsion polymerization and suspension polymerization, because emulsifiers in the emulsion polymerization and water as the solvent in the suspension polymerization are more difficult to remove.

Though not critical, the weight-average molecular weight of the component (b) is generally controlled by performing its polymerization in the presence of a chain-transfer agent. Exemplary chain-transfer agents include 2-mercaptoethanol, lauryl mercaptan, glycidyl mercaptan, mercaptoacetic acid, 2- ethylhexyl thioglycolate, 2,3-dimercapto-1-propanol, and α-methylstyrene dimer. The amount of chain-transfer agents is, for example, preferably from about 0.5 to about 15 parts by weight per 100 parts by weight of total monomer components of the component (b).

Adjustments of the reaction temperature and the amount of the polymerization initiator also enable fine control of the weight-average molecular weight. Though not critical, the reaction temperature during polymerization of the component (b) preferably ranges from 50°C to 90°C in the case typically of solution polymerization. Preferred examples of polymerization initiators include oil-soluble polymerization initiators including azo polymerization initiators such as 2,2'-azobisisobutyronitrile, 2,2'-azobis(4-methaxy-2,4-dimethylvaleronitrile), 2,2'-azobis(2,4-dimethylvaleronitrile), 2,2'-azabis(2-methylbutyronitrile), 1,1'-azobis(cyclohexane-1-carbonitrile), 2,2'-azobis(2,4,4-trimethylpentane), and dimethyl-2,2'-azabis(2-methyl propionate); and peroxide polymerization initiators such as benzoyl peroxide, t-butyl hydroperoxide, di-(t-butyl) peroxide, t-butyl peroxybenzoate, dicumyl peroxide, 1,1-bis(t-butylperoxy)-3,3,5-trimethylcyclohexane, and 1,1-bis(t-butylperoxy)cyclododecane. Each of different polymerization initiators can be used alone or in combination. The amount of polymerization initiators has only to be a common amount and is selected, for example, within a range from about 0.01 to about 20 parts by weight per 100 parts by weight of total monomer components of the component (b).

The weight-average molecular weight of the component (b) formed through the polymerization generally decreases with an elevating reaction temperature, because such elevating temperature increases the cleavage of the initiator, thereby increases the amount of generated free radicals and increases the frequency of chain transfer. The weight-average molecular weight of the component (b) also decreases with an increasing amount of the polymerization initiator, because free radicals generate in a larger amount.

The solution polymerization can employ a variety of regular solvents. Examples of such solvents include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. Each of different solvents can be used alone or in combination.

[Photoinitiator (c)] When the acrylic pressure-sensitive adhesive composition preferably further contains a photoinitiator (c) when it is a pressure-sensitive adhesive composition that is curable by the action of an active energy ray such as ultraviolet ray. Exemplary photoinitiators (c) include, but are not limited to, benzoin ethers such as benzoin methyl ether, benzoin propyl ether, and 2,2-dimethoxy-1,2-diphenylethan-1-one; substituted benzoin ethers such as anisole methyl ether; substituted acetophenones such as 2,2-diethoxyacatophenone, 2,2-dimethoxy-2-phenylacetophenone, and 1-hydroxy-cyclohexyl phenyl ketone; substituted a-ketols such as 2-methyl-2-hydroxypropiophenone; aromatic sulfonyl chlorides such as 2-naphthalenesulfonyl chloride; and photoactivatable oximes such as 1-phenyl-1,1-prapanedione-2-(o-ethoxycarbonyl)-oxime.

[Multifunctional (Meth)acrylate (d)]

The acrylic pressure-sensitive adhesive composition preferably further contains a multifunctional (meth)acrylate (d) for imparting a suitable gel fraction to the pressure-sensitive adhesive. Such multifunctional (meth)acrylates (d) are not especially limited as long as being compounds each having at least two (meth)acryloyl groups, and examples thereof include trimethylolpropane tri(meth)acrylates, pentaerythritol tetra(meth)acrylates, 1,2-ethylene glycol di(meth)acrylates, 1,6-hexanediol di(meth)acrylates, and 1,22-dodecanediol di(meth)acrylates. Each of different multifunctional (meth) acrylates (d) may be used alone or in combination.

[Other Additives]

The acrylic pressure-sensitive adhesive composition may further contain any of additives other than the above-mentioned components, within ranges not adversely affecting the advantages of the present invention. Exemplary additives include tackifiers such as terpene resins (e.g., terpene resins, terpene phenol resins, aromatic modified terpene resins, hydrogenated terpene resins), petroleum resins (e.g., aliphatic, alicyclic, and aromatic petroleum resins), rosin resins (e.g., rosin and hydrogenated rosin esters), coumarone-indene resins, and styrene resins; colorants such as pigments; fillers such as calcium oxide, magnesium oxide, silica, zinc oxide, and titanium oxide; crosslinking agents such as isocyanate crosslinking agents, epoxy crosslinking agents, urea crosslinking agents, melamine crosslinking agents, carboxylic acid or acid anhydride crosslinking agents, and metallic compound crosslinking agents; cross-linkers; flame retardants; age inhibitors; antistatic agents; softeners such as process oils and petroleum softeners; antioxidants; plasticizers; surfactants; and blowing agents such as heat-expandable microspheres.

The acrylic pressure-sensitive adhesive composition may further contain, in addition to the additives, thickening polymers so as to control the viscosity of the composition. Exemplary thickening polymers include copolymers of the alkyl (meth)acrylate (a1) with another component such as acrylic acid, acrylamide, acrylonitrile, or acryloylmorpholine;

styrene butadiene rubbers (SBR); isoprene rubbers; styrene butadiene block copolymers (SBS); ethylene-vinyl acetate copolymers; acrylic rubbers; polyurethanes; and polyesters. Each of different thickening polymers may be used alone or in combination.

[Acrylic Pressure-Sensitive Adhesive Composition]

The acrylic pressure-sensitive adhesive composition is prepared by mixing the components (a) and (b), and, according to necessity, photoinitiator (c), multifunctional (meth)acrylate (d), and other additives, according to known or common procedure.

Though not critical, the amount of the component (b) in the acrylic pressure-sensitive adhesive composition is preferably from 5 to 40 parts by weight, and more preferably from 5 to 20 parts by weight per 100 parts by weight of the component (a). The component (b), if present in an amount of less than 5 parts by weight, may not sufficiently help to exhibit advantages of the present invention, i.e., to improve adhesive strength to hard-to-adhere surfaces. In contrast, the component (b), if present in an amount of more than 40 parts by weight, may impede development of satisfactory tack.

Though not critical, the amount of the photoinitiator (c), if present, in the acrylic pressure-sensitive adhesive composition is preferably from 0.001 to 5 parts by weight, and more preferably from 0.01 to 2 parts by weight, per 100 parts by weight of the component (a). The photoinitiator (c), if present in an amount of less than 0.001 part by weight, may invite an insufficient conversion, resulting in insufficient curing of the pressure-sensitive adhesive layer. In contrast, the photoinitiator (c), if present in an amount of more than 5 parts by weight, may reduce the molecular weight of the resulting polymer after polymerization, and this may impede the development of satisfactory adhesive properties.

Though not critical, the amount of the multifunctional (meth)acrylate (d), if present, in the acrylic pressure-sensitive adhesive composition is preferably 0.001 to 30 parts by weight, and more preferably from 0.005 to 5 parts by weight, per 100 parts by weight of the component (a). The multifunctional (meth)acrylate (d), if present in an amount of less than 0.001 part by weight, may not help to develop satisfactory adhesive properties typified by holding ability. The "holding ability" refers to an ability of maintaining adhesion to an adherend against external force. The multifunctional (meth)acrylate (d), if present in an amount of more than 30 parts by weight, may not contribute to develop satisfactory tackiness.

The amount of thickening polymers in the acrylic pressure-sensitive adhesive composition is preferably 40 percent by weight or less, and typically from 5 to 40 percent by weight.

Though not critical, the total amount of additives other than the above components in the acrylic pressure-sensitive adhesive composition is preferably from about 5 to about 40 parts by weight, per 100 parts by weight of the component (a).

Typically for satisfactory coating workability and handleability, the viscosity of the acrylic pressure-sensitive adhesive composition is preferably from 3 to 40 Pa·s as measured at a temperature of 25°C with a Brookfield type viscometer. The viscosity can be controlled according typically to the conversion of the partial polymer and to the addition of thickening polymers.

The acrylic pressure-sensitive adhesive composition uses the acrylic pressure-sensitive adhesive component (a) in combination with a small amount of a specific acrylic oligomer copolymerized with a reactive silicone oil. The composition thereby exhibits a high adhesive strength to acrylic acid-rain-resistant coatings that use no or reduced amounts of melamine resins (hard-to-adhere coatings). It further exhibits a high adhesive strength to such hard-to-adhere coatings further containing silicone surface conditioners. Though details thereof remain unknown, these operations and advantages are obtained probably according to the following mechanism.

An acrylic pressure-sensitive adhesive layer, when prepared from the pressure-sensitive adhesive composition, can hold or contain a polyorganosiloxane therein, because the component (b) has a polyorganosiloxane structure in the molecule and has a molecular chain containing an alkyl (meth)acrylate as a main component. In contrast, if a simple silicone oil is dispersed instead of the component (b) in a pressure-sensitive adhesive layer, the silicone oil bleeds out to the surface of the pressure-sensitive adhesive layer due to low affinity for the acrylic pressure-sensitive adhesive, and this lowers the adhesive strength (adhesive strength) contrarily.

Known pressure-sensitive adhesives develop their bonding effect probably due mainly to interactions between melamine components and carboxyl groups of the pressure-sensitive adhesives. The bonding effect, however, is hardly obtained when they are applied to coatings using less amounts of melamine resins. In contrast, the pressure-sensitive adhesive according to the present invention can exhibit superior adhesive properties even to coatings using, if any, less amounts of melamine resins. This is probably because the strength of adhesive interface is increased. The advantages is especially exhibited when a component (b) having a backbone of a monomer component with a high glass transition temperature Tg, such as cyclohexyl methacrylate, is used.

When coatings contain silicone surface conditioners, such silicone components bleed out to the surface of coatings as described above, and known pressure-sensitive adhesives show insufficient wettability and insufficient adhesiveness to the coatings to which silicone components bleed out. In contrast, the pressure-sensitive adhesive layer

prepared from the pressure-sensitive adhesive composition according to the present invention holds and contains a polyorganosiloxane structure inside thereof and thereby has high affinity for silicone surface conditioners. Thus, the pressure-sensitive adhesive layer absorbs the silicone surface conditioners present at the coating surface, i.e., at the interface between the coating and the pressure-sensitive adhesive layer. This lowers the concentration of surface conditioners in the surface layer and increases the adhesive strength.

Though not especially limited, the acrylic pressure-sensitive adhesive composition according to the present invention is preferably used typically for the formation of a pressure-sensitive adhesive layer of a pressure-sensitive adhesive sheet. Exemplary pressure-sensitive adhesive sheets are pressure-sensitive adhesive sheets including a base or support and, arranged thereon or thereabove, a pressure-sensitive adhesive layer prepared from the acrylic pressure-sensitive adhesive composition according to the present invention. Exemplary bases include films of plastics such as polyolefins (e.g., polypropylenes) and polyesters (e.g., poly(ethylene terephthalate); porous films typically being air-permeable; elastic layers containing hollow microspheres; paper; fabrics; nonwoven fabrics; and metallic foil. Among such pressure-sensitive adhesive sheets, especially preferred is a pressure-sensitive adhesive sheet which includes an elastic layer containing hollow microspheres and, arranged on or above at least one side thereof, a pressure-sensitive adhesive layer prepared from the acrylic pressure-sensitive adhesive composition. This pressure-sensitive adhesive sheet is hereinafter referred to as an "acrylic pressure-sensitive adhesive sheet according to the present invention".

[Acrylic Pressure-Sensitive Adhesive Sheet]

Acrylic pressure-sensitive adhesive sheets according to the present invention each include at least one elastic layer (X) containing hollow microspheres, and at least one acrylic pressure-sensitive adhesive layer (Y) prepared from the acrylic pressure-sensitive adhesive composition according to the present invention. Such acrylic pressure-sensitive adhesive sheets may be a double-faced pressure-sensitive adhesive sheet (double-faced self-adhesive sheet) having adhesive faces on both sides thereof; or a single-faced pressure-sensitive adhesive sheet (single-faced self-adhesive sheet) having an adhesive face only on one side thereof. Specifically, exemplary acrylic pressure-sensitive adhesive sheets according to the present invention include (1) a double-faced pressure-sensitive adhesive sheet which includes an elastic layer (X) with tackiness and, arranged on one side thereof, a pressure-sensitive adhesive layer (Y); (2) a double-faced pressure-sensitive adhesive sheet which includes an elastic layer (X) and, arranged on both sides thereof, pressure-sensitive adhesive layers (Y); (3) a double-faced pressure-sensitive adhesive sheet which includes an elastic layer (X), a pressure-sensitive adhesive layer (Y) arranged on one side of the elastic layer (X), and a pressure-sensitive adhesive layer other than the pressure-sensitive adhesive layer (Y), arranged on the other side of the elastic layer (X); and (4) a single-faced pressure-sensitive adhesive sheet which includes an elastic layer (X) without tackiness and, arranged on one side thereof, a pressure-sensitive adhesive layer (Y). Among them, preferred is the double-faced pressure-sensitive adhesive sheet (2) which includes an elastic layer (X) and, arranged on both sides thereof, pressure-sensitive adhesive layers (Y). When an acrylic pressure-sensitive adhesive sheet according to the present invention includes two or more pressure-sensitive adhesive layers (Y), these layers may have the same or different compositions. Each of the elastic layer (X) and pressure-sensitive adhesive layer(s) (Y) may have a single-layer structure or a multi-layer structure, respectively.

The elastic layer (X) and the pressure-sensitive adhesive layer(s) (Y) may be laminated directly, or indirectly with the interposition of an intermediate layer such as adhesiveness layer; but they are preferably laminated directly. The acrylic pressure-sensitive adhesive sheets may further include one or more other layers such as under coats within ranges not adversely affecting the advantages of the present invention. Acrylic pressure-sensitive adhesive sheets may further include release film(s) (separator) in order typically to protect adhesive faces. The release film is generally affixed to the surface of the pressure-sensitive adhesive layer until the sheet is used.

[Acrylic Pressure-Sensitive Adhesive Layer (Y)]

The pressure-sensitive adhesive layer (Y) herein is a layer prepared from the acrylic pressure-sensitive adhesive composition according to the present invention and is a pressure-sensitive adhesive layer that provides an adhesive face having a high adhesive strength to hard-to--adhere adherends. Exemplary hard-to-adhere adherends include coatings such as acid-rain-resistant coatings, automotive coatings, and coatings having a surface conditioner layer (surface conditioner bleeding film) formed as a result of bleed of surface conditioners.

The way to form a pressure-sensitive adhesive layer (Y) is not limited and can be any of known or common processes for the formation of pressure-sensitive adhesive layers. Typically, the layer (Y) is preferably formed by a process of applying the acrylic pressure-sensitive adhesive composition to a suitable backing or carrier such as a release film or base, to give a layer of acrylic pressure-sensitive adhesive composition, and curing the layer with an active energy ray. Of such active energy rays, ultraviolet rays are preferably employed. This process may further include the step of drying according to necessity. Since such photo-polymerization is inhibited by oxygen typically in the air, the curing with

an active energy ray (photo-curing) is preferably carried out in the absence of oxygen. To this end, for example, photo-curing is carried out after protecting the layer of acrylic pressure-sensitive adhesive composition typically with a release film affixed thereon or photo-curing is carried out in a nitrogen atmosphere. The release film or another article used in the formation of pressure-sensitive adhesive layer (Y) may be removed (peeled off) at an appropriate time during the production of the acrylic pressure-sensitive adhesive sheet or may be removed upon use of the resulting acrylic pressure-sensitive adhesive sheet.

Exemplary active energy rays include ionizing radiations such as alpha rays, beta rays, gamma rays, neutron beams, and electron beams; and ultraviolet rays. Among them, ultraviolet rays are preferably employed. The radiation dose and application duration of active energy ray are not particularly limited, as long as the photoinitiator is activated to cause reaction of monomer components. Typically, the application of active energy ray may be carried out by applying an ultraviolet ray at a radiation dose of about 400 to about 4000 $mJ/cm^2$, which ultraviolet ray gives an irradiance of 1 to 200 $mW/cm^2$ at a wavelength of 300 to 400 nm.

The application of an active energy ray to the acrylic pressure-sensitive adhesive composition to form a pressure-sensitive adhesive layer (Y) is preferably conducted so that the resulting pressure-sensitive adhesive layer (Y) has a conversion of 90 percent by weight or more. Residual unreacted monomers can be removed through a common drying process. The conversion of the pressure-sensitive adhesive layer (Y) can be determined in the same way as in the conversion of the partial polymer.

The thickness of the pressure-sensitive adhesive layer (Y) can be suitably set according to necessity and is, for example, from about 10 to about 400 μm, preferably from about 20 to about 350 μm, and more preferably from about 30 to about 300 μm for ensuring a satisfactory bond strength.

The gel fraction of the pressure-sensitive adhesive layer (Y) is preferably 45 percent by weight or more (e.g., from 45 to 99 percent by weight), and more preferably 50 percent by weight or more (e.g., from 50 to 95 percent by weight). The pressure-sensitive adhesive layer (Y), if having a gel fraction of less than 45 percent by weight, may show insufficient cohesion and thereby exhibit insufficient holding power and/or insufficient longitudinal shear strength. The pressure-sensitive adhesive layer (Y), if having an excessively high gel fraction (of more than 99 percent by weight), may show insufficient tack, and this may adversely affect the adhesiveness and/or appearance of the sheet. The gel fraction may be determined in the following manner. About one (1) gram of the pressure-sensitive adhesive layer (Y) is sampled and precisely weighed, and this weight is defined as the weight of pressure-sensitive adhesive layer (Y) before immersion. Next, the sample is immersed in about 40 g of ethyl acetate for 7 days, all portions insoluble in ethyl acetate are recovered, dried at 130°C for 2 hours, and the dry weight of insoluble portions is determined. These measured weights are substituted in the following equation to calculate the gel fraction:

Gel fraction (%) of pressure-sensitive adhesive layer (Y) = [(Dry weight of insoluble portions)/(Weight of pressure-sensitive adhesive layer (Y) before immersion)] x 100

The pressure-sensitive adhesive layer (Y) and other pressure-sensitive adhesive layers than the pressure-sensitive adhesive layer (Y), if employed, may each further contain bubbles. In this case, the way to incorporate bubbles into these layers is not particularly limited. Typically, bubbles may be contained in the pressure-sensitive adhesive layer (Y) by a process of preparing an acrylic pressure-sensitive adhesive composition further containing a gas component that constitute bubbles (including air, or an inert gas such as nitrogen, carbon dioxide, or argon), and forming a pressure-sensitive adhesive layer (Y) using the acrylic pressure-sensitive adhesive composition containing the gas component; or by a process of forming a pressure-sensitive adhesive layer (Y) from an acrylic pressure-sensitive adhesive composition further containing a blowing agent (foaming agent). Bubbles are incorporated preferably by the former process of incorporating gas into the composition.

[Elastic Layer (X) Containing Hollow Microspheres]

Though not especially limited as long as containing hollow microspheres and being viscoelastic, the elastic layer (X) for use herein generally contains hollow microspheres and a base polymer constituting an elastic body. The elastic layer (X) is generally prepared through polymerization of a composition containing at least hollow microspheres and monomer component(s) constituting the base polymer. The elastic layer (X) may have tackiness (adhesiveness).

The base polymer for use in the elastic layer (X) herein is not especially limited and can be suitably selected

from among known base polymers. Exemplary usable base polymers include acrylic polymers, rubber polymers, vinyl alkyl ether polymers, silicone polymers, polyesters, polyamides, urethane polymers, fluorocarbon polymers, and epoxy polymers. Of these base polymers, acrylic polymers are preferably used herein for better adhesiveness to the pressure-sensitive adhesive layer (Y). Each of different base polymers may be used alone or in combination.

The acrylic polymer for use herein is a polymer containing, as a main monomer component, an alkyl (meth) acrylate having a linear or branched-chain alkyl group. Exemplary alkyl (meth)acrylates for use as main monomer components in the acrylic polymer include alkyl (meth)acrylates whose alkyl moiety has 1 to 20 carbon atoms, such as methyl (meth)acrylates, ethyl (meth)acrylates, n-propyl (meth)acrylates, isopropyl (meth)acrylates, n-butyl (meth)acrylates, isobutyl (meth)acrylates, sec-butyl (meth)acrylates, t-butyl (meth)acrylates, pentyl (meth)acrylates, isopentyl (meth)acrylates, hexyl (meth)acrylates, heptyl (meth)acrylates, n-octyl (meth)acrylates, isooctyl (meth)acrylates, 2-ethylhexyl (meth)acrylates, nonyl (meth)acrylates, isononyl (meth)acrylates, decyl (meth)acrylates, isodecyl (meth)acrylates, undecyl (meth)acrylates, dodecyl (meth)acrylates, tridecyl (meth)acrylates, tetradecyl (meth)acrylates, pentadecyl (meth)acrylates, hexadecyl (meth)acrylates, heptadecyl (meth)acrylates, octadecyl (meth)acrylates, nonadecyl (meth) acrylates, and eicosyl (meth)acrylates. Among them, alkyl (meth)acrylate whose alkyl moiety has 2 to 14 carbon atoms are preferred, and alkyl (meth)acrylates whose alkyl moiety has 2 to 10 carbon atoms are more preferred. Each of different alkyl (meth)acrylates may be used alone or in combination.

The acrylic polymers can further contain, as monomer components, other (meth)acrylates than the alkyl (meth) acrylates having linear or branched-chain alkyl groups. Exemplary other (meth)acrylates include cycloalkyl (meth)acrylates each having an alicyclic alkyl group, such as cyclopentyl (meth)acrylates, cyclohexyl (meth)acrylates, and isobornyl (meth)acrylates.

The content of alkyl (meth)acrylates having a linear or branched-chain alkyl group, which work as main monomer components in the acrylic polymer, is preferably 60 percent by weight or more, and more preferably 80 percent by weight or more, based on the total amount of monomer components constituting the acrylic polymer.

The acrylic polymer may further contain, as monomer components, various copolymerizable monomers such as polar-group-containing monomers and multifunctional monomers. Use of copolymerizable monomers as monomer components enables the elastic layer (X) to be improved in properties such as elasticity and flexibility. Each of different copolymerizable monomers may be used alone or in combination.

Exemplary polar-group-containing monomers include carboxyl-containing monomers such as acrylic acid, methacrylic acid, carboxyethyl (meth)acrylates, carboxypentyl (meth)acrylates, itaconic acid, maleic acid, fumaric acid, crotonic acid, and isocrotonic acid, and anhydrides of them, such as maleic anhydride; hydroxyl-containing monomers such as 2-hydroxyethyl (meth)acrylates, 3-hydroxypropyl (meth)acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; sulfo-containing monomers such as 2-acrylamido-2-methylpropanesulfonic acid and sulfopropyl acrylate; phosphate-containing monomers such as 2-hydroxyethylacryloyl phosphate; amido-containing monomers such as (meth)acrylamides, N,N-dimethyl(meth)acrylamides, N-methylol(meth)acrylamides, N-methoxymethyl(meth)acrylamides, and N-butoxymethyl(meth)acrylamides; amino-containing monomers such as aminoethyl (meth)acrylates, dimethylaminoethyl (meth)acrylates, and t-butylaminoethyl (meth)acrylates; glycidyl-containing monomers such as glycidyl (meth)acrylates and methylglycidyl (meth)acrylates; cyanoacrylate monomers such as acrylonitrile and methacrylonitrile; and heterocycle-containing vinyl monomers such as N-vinyl-2-pyrralidone, (meth)acryloylmorpholine, N-vinylpyridine, N-vinylpiperidone, N-vinylpyrimidine, N-vinylpiperazine, N-vinylpyrazine, N-vinylpyrrole, N-vinylimidazole, and N-vinyloxazole. Of such polar-group-containing monomers, preferred are carboxyl-containing monomers such as acrylic acid and methacrylic acid, and anhydrides of them. Each of different polar-group-containing monomers may be used alone or in combination.

The amount of polar-group-containing monomers is preferably 30 percent by weight or less (e.g., from 1 to 30 percent by weight), and more preferably from 3 to 20 percent by weight, based on the total amount of monomer components constituting the acrylic polymer. Polar-group-containing monomers, if present in an amount of more than 30 percent by weight, may adversely affect the flexibility of the elastic layer (X), and this may impede the adhesion of the pressure-sensitive adhesive sheet to adherends having uneven surfaces. In contrast, polar-graup-cantaining monomers, if present in an excessively small amount (e.g., in an amount of less than 1 percent by weight based on the total amount of monomer components constituting the acrylic polymer), may not help the elastic layer (X) to have satisfactory cohesion, and the resulting pressure-sensitive adhesive sheet may show insufficient holding properties and may not be worked satisfactorily upon working such as cutting or punching.

Examples of the multifunctional monomers include hexanediol di(meth)acrylates, polyethylene glycol di(meth) acrylates, polypropylene glycol di(meth)acrylates, neopentyl glycol di(meth)acrylates, pentaerythritol di(meth)acrylates, pentaerythritol tri(meth)acrylates, dipentaerythritol hexa(meth)acrylates, trimethylolpropane tri(meth)acrylates, tetramethylolmethane tri(meth)acrylates, allyl (meth)acrylates, vinyl (meth)acrylates, divinylbenzene, epoxy acrylate, polyester acrylates, urethane acrylates, and butanediol di(meth)acrylates.

The amount of multifunctional monomers is preferably 2 percent by weight or less (e.g., from 0.01 to 2 percent

by weight), and more preferably from 0.02 to 1 percent by weight, based on the total amount of monomer components constituting the acrylic polymer. Multifunctional monomers, if present in an amount of more than 2 percent by weight, may for example adversely affect the flexibility of the elastic layer (X), and this may impede the adhesion of the pressure-sensitive adhesive sheet to adherends having uneven surfaces. In contrast, multifunctional monomers, if present in an excessively small amount (e.g., in an amount of less than 0.01 percent by weight based on the total amount of monomer components constituting the acrylic polymer), may not help the elastic layer (X) to have satisfactory cohesion, and the resulting pressure-sensitive adhesive sheet may show insufficient holding properties and may not be worked satisfactorily upon working such as cutting or punching.

Examples of copolymerizable monomers other than polar-group-containing monomers and multifunctional monomers include vinyl esters such as vinyl acetate and vinyl propionate; aromatic vinyl compounds such as styrene and vinyltoluene; olefins and dienes such as ethylene, butadiene, isoprene, and isobutylene; vinyl ethers such as vinyl alkyl ethers; vinyl chloride; alkoxyalkyl (meth)acrylate monomers such as methoxyethyl (meth)acrylates and ethoxyethyl (meth)acrylates; sulfo-containing monomers such as sodium vinylsulfonate; phosphate-containing monomers such as 2-hydroxyethyl acryloylphosphate; imido-containing monomers such as cyclohexylmaleimide and isopropylmaleimide; isocyanato-containing monomers such as 2-methacryloyloxyethyl isocyanate; fluorine-containing (meth)acrylates; and silicon-containing (meth)acrylates.

The elastic layer (X) herein contains hollow microspheres. The presence of microspheres in the elastic layer (X) allows the acrylic pressure-sensitive adhesive sheet typically to have a higher longitudinal shear strength (adhesiveness under shear) and to be worked more satisfactorily. Each of different types of hollow microspheres may be used alone or in combination.

Of such hollow microspheres, inorganic or organic hollow microspheres are preferably used. Specifically, exemplary hollow inorganic microspheres include hollow balloons made of glass, such as hollow glass balloons; hollow balloons made of metallic compounds, such as hollow alumina balloons; and hollow balloons made of ceramics, such as hollow ceramic balloons. Exemplary hollow organic microspheres include hollow balloons made from resins, such as hollow acrylic balloons and hollow vinylidene chloride balloons.

Exemplary commercially available hollow glass balloons include a product supplied under the trade name "Glass Microballoon" by Fuji Silysia Chemical Ltd.; products supplied under the trade names "CEL-STAR Z-25," "CEL-STAR Z-27," "CEL-STAR CZ-31T," "CEL-STAR Z-36," "CEL-STAR Z-39," "CEL-STAR T-36," "CEL-STAR SX-39," and "CEL-STAR PZ-6000" by Tokai Kogyo Co., Ltd.; and a product supplied under the trade name "Silacs Fine Balloon" by Fine Balloon Private Limited Company.

Of the hollow microspheres, hollow inorganic microspheres are preferably used, of which hollow glass balloons are more preferably used, from the viewpoints typically of weight and efficiency in polymerization by the application of an active energy ray (particularly by the application of an ultraviolet ray). Hollow glass balloons, if used, help to improve adhesiveness at high temperatures, without adversely affecting the other properties such as shear strength and holding power.

Though not critical, the particle diameter (average particle diameter) of the hollow microspheres can be selected within ranges of, for example, from 1 to 500 $\mu$m, preferably from 5 to 200 $\mu$m, and more preferably from 10 to 100 $\mu$m.

Though not critical, the specific gravity of the hollow microspheres can be chosen within ranges typically of from 0.1 to 0.8 g/cm$^3$, and preferably from 0.12 to 0.5 g/cm$^3$. Hollow microspheres, if having a specific gravity less than 0.1 g/cm$^3$ and when mixed into a composition for constituting the elastic layer (X), may be difficult to uniformly disperse in the composition, because such lightweight hollow microspheres tend to float upon the composition. In contrast, hollow microspheres, if having a specific gravity of more than 0.8 g/cm$^3$, may be expensive and may increase the production cost.

Though not critical, the amount of the hollow microspheres is, for example, preferably from 5 to 50 percent by volume, more preferably from 10 to 45 percent by volume, and furthermore preferably from 15 to 40 percent by volume, based on the total volume of the elastic layer (X). Hollow microspheres, if occupying less than 5 percent by volume of the elastic layer (X), may not satisfactorily exhibit their advantages. In contrast, if occupying more than 50 percent by volume of the elastic layer (X), they may adversely affect the adhesiveness (tackiness) of the elastic layer (X).

The base polymer (particularly acrylic polymer) of the elastic layer (X) may be prepared according to a known polymerization process such as solution polymerization, emulsion polymerization, or bulk polymerization (mass polymerization), but it is preferably prepared according to a polymerization process through curing by the action of heat or an active energy ray using a polymerization initiator. By using a curing reaction by the action of heat or an active energy ray, an elastic layer (X) can be formed by curing the material resin composition under such a condition that the microspheres are still contained in the composition. Specifically, an elastic layer (X) containing microspheres stably can be easily prepared.

The polymerization initiator is not especially limited in its type and can for example be a thermal polymerization initiator or photoinitiator. Of such initiators, photoinitiators are preferably used for shorter polymerization time. Each of different polymerization initiators can be used alone or in combination.

A resin composition for constituting the elastic layer (X), if containing a photoinitiator, enables the formation of

the elastic layer (X) simultaneously with the formation of the pressure-sensitive adhesive layer (Y) during the preparation of the acrylic pressure-sensitive adhesive sheet. This is because the elastic layer (X) and pressure-sensitive adhesive layer (Y) in this case are both curable by the application of an active energy ray.

The photoinitiator for use herein are not particularly limited and can for example be any of the photoinitiators listed as the photoinitiator (c). Though not critical, the amount of photoinitiators is preferably from 0.01 to 5 parts by weight, and more preferably from 0.05 to 3 parts by weight, per 100 parts by weight of total monomer components contained in the resin composition for constituting the elastic layer (X).

It is important to apply an active energy ray for activating the photoinitiator. Exemplary active energy rays include ionizing radiations such as alpha rays, beta rays, gamma rays, neutron beams, and electron beams; and ultraviolet rays. Among them, ultraviolet rays are preferably employed. The radiation dose and application duration of active energy ray are not particularly limited, as long as the photoinitiator is activated to cause reactions of monomer components.

Examples of thermal polymerization initiators, if used in the resin composition for constituting the elastic layer (X), include azo thermal polymerization initiators such as 2,2'-azobisisobutyronitrile, 2,2'-azobis-2-methylbutyronitrile, dimethyl 2,2'-azobis(2-methylpropionate), 4,4'-azabis-4-cyanovaleric acid, azobisisovaleronitrile, 2,2'-azabis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride; peroxide thermal polymerization initiators such as dibenzoyl peroxide and tert-butyl permaleate; and redox thermal polymerization initiators.

The elastic layer (X) may further contain bubbles in addition to the hollow microspheres. This may improve cushioning properties and adhesiveness of the resulting sheet. Though not especially limited, the way to incorporate bubbles into the elastic layer (X) can be the same as the way to incorporate bubbles into the pressure-sensitive adhesive layer (Y).

The amount of bubbles to be contained in the elastic layer (X) can be suitably set within ranges not adversely affecting characteristic properties of the sheet, such as elasticity and flexibility, but is preferably, for example, from 5 to 50 percent by volume, more preferably from 10 to 40 percent by volume, and furthermore preferably from 12 to 30 percent by volume, based on the total volume of the elastic layer (X). Bubbles, if present in an amount of less than 5 percent by volume, may not sufficiently contribute to stress relaxation, and the resulting sheet may often show insufficient resistance to resilience. Bubbles, if present in an amount of more than 50 percent by volume, may cause open cells penetrating through the elastic layer (X), and this may adversely affect adhesive properties and appearance of the sheet. In addition, the elastic layer (X) may become excessively flexible so as to suffer from insufficient shear strength.

Bubbles to be contained in the elastic layer (X) are basically preferably closed cells, but they may be a mixture of closed cells and semi-closed cells. Such bubbles or cells generally have spherical shapes, but they may have deformed or irregular spherical shapes. The average cell size (diameter) of bubbles is not particularly limited and can be selected within ranges of typically from 1 to 1000 $\mu$m, preferably from 10 to 500 $\mu$m, and more preferably from 30 to 300 $\mu$m.

A gaseous component constituting bubbles is not particularly limited and can be any gaseous component including inert gas such as nitrogen, carbon dioxide, or argon; or air. When a reaction such as polymerization is conducted after adding a gaseous component for constituting bubbles into the composition, it is important that the gaseous component should be one not adversely affecting the reaction. Of such gaseous components, nitrogen gas is preferred, because it does not adversely affect the reaction and is available inexpensively.

The elastic layer (X) preferably further contains one or more fluorine-containing surfactants, in addition to the base polymer and hollow microspheres. Of such fluorine-containing surfactants, preferred are those having an oxy-($C_2$-$C_3$) alkylene group and a fluorinated hydrocarbon group in the molecule. Use of the fluorine-containing surfactants helps to reduce blocking and frictional drag between the hollow microspheres and polymer in the elastic layer (X) so that stress can satisfactorily disperse in the elastic layer (X). This allows the resin composition for constituting the elastic layer (X) to have high cohesive strength and to follow uneven surfaces satisfactorily. The resulting elastic layer (X) is superior in balance between bond strength and shear strength.

The oxy-($C_2$-$C_3$) alkylene group is represented by the formula: -R-O-, wherein R represents a linear or branched alkylene group having 2 or 3 carbon atoms. The presence of an oxy-($C_2$-$C_3$) alkylene group in the molecule reduces blocking and frictional drag between the hollow microspheres and base polymer, and this allows the stress to disperse satisfactorily in the elastic layer (X). The resulting fluorine-containing surfactant can impart a high adhesive strength to the elastic layer (X). The oxy-($C_2$-$C_3$) alkylene group may exist in any form such as an alcohol in which the terminal oxygen is bonded to hydrogen atom; an ether in which the terminal oxygen is bonded to another hydrocarbon group; and an ester in which the terminal oxygen is bonded via carbonyl group to another hydrocarbon group. The oxy-($C_2$-$C_3$) alkylene structure may also exist as part of a cyclic structure such as a cyclic ether or lactone. Specific examples of the oxy-($C_2$-$C_3$) alkylene group include oxyethylene group ($-CH_2CH_2O-$) and oxypropylene group [$-CH_2CH(CH_3)O-$]. The fluorine-containing surfactant may have one or more of these oxy-($C_2$-$C_3$) alkylene groups.

Though not especially limited, the fluorinated hydrocarbon group is preferably a perfluoro group. The perfluoro group may be monovalent or multivalent (bivalent or higher). The fluorinated hydrocarbon group may have a double bond and/or triple bond and may have any of linear, branched, and cyclic structures. The fluorinated hydrocarbon group

is not particularly limited in its number of carbon atoms and may have 1 or more carbon atoms, preferably 3 to 30 carbon atoms, and more preferably 4 to 20 carbon atoms. The fluorine-containing surfactant may have one or more different fluorinated hydrocarbon groups per molecule. When the elastic layer (X) contains bubbles, the presence of fluorinated hydrocarbon group helps the elastic layer (X) to contain bubbles stably and satisfactorily therein, in addition to the above advantages such as reduction in frictional drag.

Though not especially limited, nonionic surfactants are preferred among the fluorine-containing surfactants, because such nonionic fluorine-containing surfactants may satisfactorily disperse in the base polymer. Each of different fluorine-containing surfactants may be used alone or in combination.

Though not especially limited, copolymers each containing, as monomer components, a monomer having an oxy-($C_2$-$C_3$) alkylene group and a monomer having a fluorinated hydrocarbon group are preferred as fluorine-containing surfactants. Preferred examples of such copolymers include block copolymers and graft copolymers.

Exemplary block copolymers (copolymers each having an oxy-($C_2$-$C_3$) alkylene group and a fluorinated hydrocarbon group in their principal chains) include polyoxyethylene perfluoroalkyl ethers, perfluoroalkylated polyoxyethylenes, polyoxypropylene perfluoroalkyl ethers, polyoxyisopropylene perfluoroalkyl ethers, perfluoroalkylated polyoxyethylene sorbitans, perfluoroalkylated polyoxyethylene polyoxypropylene block copolymers, and perfluoroalkylated polyoxyethylene glycols.

Of graft copolymers (copolymers having an oxy-($C_2$-$C_3$) alkylene group and a fluorinated hydrocarbon group in their side chains), preferred are copolymers containing, as monomer components, at least a vinyl compound having a polyoxyalkylene group with a vinyl compound having a fluorinated hydrocarbon group, of which acrylic copolymers are more preferred. Exemplary vinyl compounds each having a polyoxyalkylene group include polyoxyalkylene (meth)acrylates such as polyoxyethylene (meth)acrylates, polyoxypropylene (meth)acrylates, and polyoxyethylene polyoxypropylene (meth)acrylates. Exemplary vinyl compounds each having a fluorinated hydrocarbon group include (meth)acrylates each having a fluorinated hydrocarbon moiety, including perfluoroalkyl (meth)acrylates such as perfluorobutyl (meth)acrylates, perfluoroisobutyl (meth)acrylates, and perfluoropentyl (meth)acrylates.

The fluorine surfactants may further contain another structure than the above structures, such as an alicyclic hydrocarbon group and an aromatic hydrocarbon group. It may also contain a variety of functional groups such as carboxyl group, sulfonic group, cyano group, amido group, and amino group, within ranges not impeding dispersion in the base polymer. Typically, a fluorine surfactant, if being a vinyl copolymer, may contain, as monomer components, one or more monomer components copolymerizable with the vinyl compound having a polyoxyalkylene group and the vinyl compound having a fluorinated hydrocarbon group. Each of different copolymerizable monomers may be used alone or in combination.

Of copolymerizable monomer components, preferred examples include ($C_1$-$C_{20}$) alkyl esters of (meth)acrylic acids, such as undecyl (meth)acrylates and dodecyl (meth)acrylates; (meth)acrylates having an alicyclic hydrocarbon group, such as cyclopentyl (meth)acrylates; and (meth)acrylate having an aromatic hydrocarbon group, such as phenyl (meth)acrylates. Exemplary copolymerizable monomer components further include carboxyl-containing monomers such as maleic acid and crotonic acid; sulfo-containing monomers such as sodium vinylsulfonate; aromatic vinyl compounds such as styrene and vinyltoluene; olefins and dienes such as ethylene and butadiene; vinyl ethers such as vinyl alkyl ethers; amido-containing monomers such as acrylamide; amino-containing monomers such as (meth)acryloylmorpholine; glycidyl-containing monomers such as glycidyl methyl (meth)acrylates; and isocyanato-containing monomers such as 2-methacryloyloxyethyl isocyanate. Exemplary usable copolymerizable monomers further include multifunctional copolymerizable monomers (multifunctional monomers) such as dipentaerythritol hexa(meth)acrylates and divinylbenzene.

Though not critical, the fluorine surfactant is preferably one having a weight-average molecular weight of less than 20000 (e.g., 500 or more and less than 20000) for highly effectively reducing blocking and frictional drag between the base polymer and microspheres. More preferably, the fluorine surfactant having a weight-average molecular weight of less than 20000 is used in combination with another fluorine surfactant having a weight-average molecular weight of 20000 or more (e.g., from 20000 to 100000, preferably from 22000 to 80000, and more preferably from 24000 to 60000), whereby the bubbles are contained more satisfactorily and more stably in the composition and in the resulting layer.

Examples of the fluorine-containing surfactants having a weight-average molecular weight of less than 20000 include products supplied under the trade names "FTERGENT 251" and "FTX-218" by NEOS Co., Ltd.; products supplied under the trade names "Megafac F-477" and "Megafac F-470" by Dainippon Ink and Chemicals, Inc.; and products supplied under the trade names "Surflon S-381, S-383, S-393, KH-20, and KH-40" by AGC Seimi Chemical Co., Ltd. Examples of the fluorine-containing surfactants having a weight-average molecular weight of 20000 or more preferred herein include products supplied under the trade names "EFTOP EF-352 and EF-801" by JEMCO Inc.; and a product supplied under the trade name "Unidyne TG-656" by Daikin Industries, Ltd.

Though not critical, the amount (as solids content) of fluorine-containing surfactants can be chosen within ranges of from 0.01 to 5 parts by weight, preferably from 0.02 to 3 parts by weight, and more preferably from 0.03 to 1 part by weight, per 100 parts by weight of total monomer components constituting the base polymer in the resin composition for the elastic layer (X), especialy per 100 parts by weight of total monomer components for constituting the acrylic polymer containing an alkyl (meth)acrylate as a main monomer component. Fluorine-containing surfactants, if used in an amount of less than 0.01 part, may not sufficiently help to reduce the blocking and frictional drag between the hollow microspheres and the polymer in the elastic layer (X). In contrast, fluorine-containing surfactants, if used in an amount of more than 5 parts by weight, may increase the cost or may adversely affect the adhesive performance of the sheet.

The resin composition for the elastic layer (X) may further contain suitable additives according to the use, in addition to the above components such as fluorine-containing surfactants, base polymers, hollow microspheres, and polymerization initiators. Exemplary usable additives include crosslinking agents such as polyisocyanate crosslinking agents, silicone crosslinking agents, epoxy crosslinking agents, and alkyl-etherified melamine crosslinking agents; tackifiers including tackifiers that are solid, semisolid, or liquid at ambient temperature (room temperature) and are made from materials such as rosin derivative resins, polyterpene resins, petroleum resins, and oil-soluble phenolic resins; plasticizers; fillers; age inhibitors; and colorants such as pigments and dyestuffs. Typically, an elastic layer (X), if formed by using a photoinitiator, may be colored by using pigments (coloring pigments), as long as not inhibiting photopolymerization. When the elastic layer (X) is to be colored black, carbon black, for example, may be used as a coloring pigment. The amount of the carbon black is preferably 0.15 parts by weight or less (for example from 0.001 to 0.15 parts by weight), and more preferably from 0.02 to 0.1 parts by weight, per 100 parts by weight of total monomer components consisting the base polymer in the resin composition for the elastic layer (X). The above-specified range is set for achieving a suitable degree of coloring and for not inhibiting the photopolymerization reaction.

The resin composition for the elastic layer (X) can be prepared by mixing or blending components including monomer components constituting the base polymer (e.g., alkyl (meth)acrylates), polymerization initiators, and additives according to a known technique. In the preparation, part of monomer components may be polymerized according to necessity, typically for the control of viscosity. Specifically, the resin composition may be prepared, for example, according to the following procedure. (i) Initially, monomer components (e.g., alkyl (meth)acrylates and other copolymerizable monomers) are mixed with a polymerization initiator such as photoinitiator to give a monomer mixture. (ii) The monomer mixture is subjected to a polymerization reaction according to the type of the polymerization initiator (e.g., polymerization by the application of an ultraviolet ray) to give a composition (syrup) only part of whose monomer components have been polymerized. Next (iii) the resulting syrup is mixed with hollow microspheres and, according to necessity, fluorine-containing surfactants and other additives. (iv) Bubbles are introduced to and mixed with the compound prepared from the step (iii) when bubbles are to be incorporated into the elastic layer (X). In this manner, the resin composition for the elastic layer (X) can be obtained. The way to prepare the resin composition for the elastic layer (X) is not limited to the above procedure. Typically, the resin composition may be prepared by preparing a monomer mixture further containing fluorine-containing surfactants and hollow microspheres before preparation of the syrup.

Bubbles, if to be contained in the elastic layer (X), are preferably incorporated as a last component into the resin composition for the elastic layer (X) as in the above-mentioned preparation procedure. This helps the bubbles to be satisfactorily mixed with and stably present in the elastic layer (X). A compound (composition) before incorporation of bubbles (e.g., the compound prepared from the step (iii)) preferably has a high viscosity, so as to maintain the mixed bubbles stably. Though not critical, the viscosity of the compound before incorporation of bubbles is, for example, preferably from 5 to 50 Pa·s, and more preferably from 10 to 40 Pa·s, as measured with a BH type viscometer using a No. 5 rotor at a number of revolutions of 10 rpm and a temperature of 30°C. The compound, if having a viscosity of less than 5 Pa·s, may not satisfactorily hold bubbles, because incorporated bubbles may immediately coalesce to escape out of the system. In contrast, the compound, if having an excessively high viscosity of more than 50 Pa·s, may be difficult to give a satisfactory elastic layer (X) through coating. The viscosity can be controlled, for example, by incorporating polymer components such as acrylic rubbers and thickening additives; or by partially polymerizing monomer components for constituting the base polymer.

The way to incorporate bubbles in the resin composition for the elastic layer (X) during preparation is not especially limited and may be any known process for mixing such bubbles. An exemplary device for use herein is one that includes a disc having a through hole at the center part, a stator having a multiplicity of fine teeth and arranged on the disc, and a rotor facing the stator, having a multiplicity of fine teeth, and arranged on the disc. Using this device, the compound to which bubbles are to be contained is introduced in between the teeth of the stator and the teeth of the rotor, and the a gaseous component for constituting bubbles (bubble-constituting gas) is introduced via the through hole into the compound while rotating the rotor at high speed, to thereby give a resin composition bearing finely divided and dispersed bubble-constituting gas.

To suppress or prevent coalescence of bubbles, it is desirable to carry out the steps from the incorporation of bubbles to the formation of the elastic layer (X) continuously as a series of steps.

Though not especialy limited, the elastic layer (X) may be formed by applying a resin composition for the elastic layer (X) to a suitable carrier such as a release film or base to form a layer of resin composition, and curing (e.g., thermal curing or curing upon the application of an active energy ray) and/or drying the layer according to necessity. Curing by

the application of an active energy ray (photocuring), if employed, is preferably carried out with blocking oxygen, because oxygen typically in the air may adversely affect the photopolymerization reaction. The oxygen blocking may be carried out, for example, by protecting the layer typically with a release film (separator) applied thereto, or by carrying out the photocuring in a nitrogen atmosphere. The release film (separator) used in the formation of the elastic layer (X) may be removed during a suitable step in the production of the acrylic pressure-sensitive adhesive sheet or may be removed upon use of the produced acrylic pressure-sensitive adhesive sheet.

Tough not critical, the thickness of the elastic layer (X) may be chosen within ranges of, for example, from 200 to 5000 μm, preferably from 300 to 4000 μm, and more preferably from 400 to 3000 μm. The elastic layer (X), if having a thickness of less than 200 μm, may not help to provide satisfactory cushioning properties of the sheet, resulting in insufficient adhesiveness of the sheet to curved faces and uneven faces. In contrast, the elastic layer (X), if having a thickness of more than 5000 μm, may be difficult to have a uniform thickness and be difficult to give a sheet having a uniform thickness. The elastic layer (X) may have a single-layer structure or multilayer structure.

The elastic layer (X) can be used as a pressure-sensitive adhesive sheet having an adhesive strength necessary as a pressure-sensitive adhesive sheet, by controlling the type and amount of the base polymer and types and amounts of additives and other components. The elastic layer (X) can also be used as a sheet having no adhesiveness and playing a role as a carrier, by choosing the composition (formulation) thereof.

[Other Layers Than Elastic Layer (X) and Pressure-Sensitive Adhesive Layer (Y)]

A pressure-sensitive adhesive layer other than the pressure-sensitive adhesive layer (Y) can be prepared by using a known pressure-sensitive adhesive according to a known process for the formation of pressure-sensitive adhesive layers. Exemplary pressure-sensitive adhesives herein include acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives. The thickness of the pressure-sensitive adhesive layer other than the pressure-sensitive adhesive layer (Y) is not especially limited and can be set suitably according typically to the purpose and method of use.

The acrylic pressure-sensitive adhesive sheets may include one or more intermediate layers arranged as intermediate layers typically between the elastic layer (X) and the pressure-sensitive adhesive layer (Y). Exemplary intermediate layers include a coating layer of release agent to impart releasability; a coating layer of primer to improve adhesion; a layer to help the sheet to be satisfactorily deformable; a layer to provide a larger adhesion area to adherends; a layer to provide higher bond strength to adherends; a layer to allow the sheet to satisfactorily follow the surface shape of adherends; a layer to more satisfactorily reduce the bond strength of the sheet as a result of heating; and a layer to allow the sheet to peel off more satisfactorily as a result of heating.

The acrylic pressure-sensitive adhesive sheets may be wound into rolls or may be stacked as sheets. Specifically, the acrylic pressure-sensitive adhesive sheets may each be in the form typically of a sheet or tape. The adhesive face of an acrylic pressure-sensitive adhesive sheet, if wound as a roll, may be protected by a release film (separator) or by a releasably treated layer (backing layer) arranged on a carrier (base) on the opposite side to the adhesive face. Exemplary release agents (parting agents) for the formation of the releasably treated layer (backing layer) on the carrier include silicone release agents and long-chain alkyl release agents.

[Release Film (Separator)]

Release films (separators) are used in the production of the acrylic pressure-sensitive adhesive sheet or used as a protector typically for adhesive face of the produced acrylic pressure-sensitive adhesive sheet before use. The release film is not necessarily used in the production of the acrylic pressure-sensitive adhesive sheet but is preferably used so as to cover the surface of sheet to thereby prevent the sheet from contact with oxygen, because oxygen typically in the air may adversely affect the photopolymerization reaction. The release film is generally removed when the acrylic pressure-sensitive adhesive sheet is used.

Though not especially limited as long as being able to block oxygen and to permeate rays (light), examples of the release film include bases having a releasably treated surface treated with a release agent (parting agent) at least on one side thereof; as well as bases showing low adhesiveness and made typically from fluorocarbon polymers such as polytetrafluoroethylenes, polychlorotrifluoroethylenes, poly(vinyl fluoride)s, poly(vinylidene fluoride)s, tetrafluoroethylene/hexafluoropropylene copolymers, and chlorofluoroethylene/vinylidene fluoride copolymers); and bases showing low adhesiveness and made from apolar polymers including olefinic resins such as polyethylenes and polypropylenes. Such a low-adhesive base can use its both sides as release surfaces. In contrast, a base having one or two releasably treated surfaces can use the releasably treated surface(s) as release surface(s).

Exemplary bases for use in the bases having a releasably treated surface on at least one side thereof include

plastic base films (synthetic resin films) including polyester films such as poly(ethylene terephthalate) films; olefinic resin films such as polyethylene films and polypropylene films; poly(vinyl chloride) films; polyimide films; polyamide films such as nylon films; and rayon films. Exemplary bases further include paper bases, i.e., bases made of papers such as woodfree papers, Japanese papers, kraft papers, glassine papers, synthetic papers, and topcoat papers. Among these bases, polyester films such as poly(ethylene terephthalate) films are preferably used.

The release agent (parting agent) is not particularly limited, and examples thereof include silicone release agents, fluorine release agents, and long-chain alkyl release agents. Each of different release agents may be used alone or in combination. The release film may be prepared, for example, according to a common procedure.

The thickness of release film is not particularly limited, as long as the release film being able to block oxygen and to permeate rays (light). The release film can have a single-layer structure or multilayer structure.

[Adherends]

The acrylic pressure-sensitive adhesive sheets according to the present invention can be applied to hard-to-adhere adherends not specifically limited. Exemplary hard-to-adhere adherends include coatings such as acid-rain-resistant coatings and automotive coatings; painted plates; resinous plates; and metallic plates such as stainless steel plates. Among them, the sheets are preferably applied to automotive coatings arranged typically on automotive bodies. The hard-to-adhere adherends to which the pressure-sensitive adhesive sheets are applied can have any shapes not limited. Typically, the hard-to-adhere adherends can be adherends having flat (two-dimensional) shapes or three-dimensionally curved shapes; or can be molded articles having flat shapes or three-dimensionally curved shapes and having coatings thereon. The acrylic pressure-sensitive adhesive sheets can be, for example, applied to automotive coatings so as to protect the coatings or to impart decorativeness to the coatings. The acrylic pressure-sensitive adhesive sheets can also be used for bonding articles to the automotive coatings therethrough. Exemplary articles include automotive exterior parts, automotive body-protecting parts and body-decorating parts. More specific examples are automotive moldings and plates.

Though not especially limited, exemplary coatings as adherends include polyester/melamine coatings, alkyd/melamine coatings, acrylic/melamine coatings, acrylic/urethane coatings, and acrylic/polyacid curing agent coatings.

In a preferred embodiment, the acrylic pressure-sensitive adhesive sheets are applied to coatings having a low melamine content or containing no melamine. In a more preferred embodiment, the acrylic pressure-sensitive adhesive sheets are applied to coatings having a ratio [melamine/ester peak ratio (intensity ratio (peak ratio) of melamine to ester)] of the peak derived from ester stretching vibration at around 1730 $cm^{-1}$ (ester peak; ester absorption intensity; ester intensity) to the peak derived from melamine stretching vibration at around 814 $cm^{-1}$ (melamine peak; melamine absorption intensity; melamine intensity) of 0.4 or less (e.g., from 0 to 0.4), preferably 0.3 or less (e.g., from 0 to 0.3), and more preferably 0.2 or less (e.g., from 0 to 0.2), as determined through attenuated total reflectance measurement (ATR) using Fourier transform infrared spectroscopy (FT-IR). In this connection, acrylic/melamine coatings have large melamine/ester peak ratios, because they have undergone crosslinking with melamine. In contrast, acid-rain-resistant coatings have small melamine/ester peak ratios, because they have not undergone crosslinking with melamine.

More specifically, the melamine/ester peak ratio is determined through ATR using FT-IR, in which the melamine peak is defined as the height of top of peak at 814 $cm^{-1}$ from a base line as a line passing from 725 $cm^{-1}$ to 825 $cm^{-1}$; the ester peak is defined as the height of top of peak at 1730 $cm^{-1}$ from a base line as a line passing from 1660 $cm^{-1}$ to 1780 $cm^{-1}$, and the melamine/ester peak ratio is determined from the measured melamine peak and ester peak according to the following equation: (Melamine/ester peak ratio) = (Melamine peak) / (Ester peak)

The acrylic pressure-sensitive adhesive sheets are advantageously applied to coatings on which surface conditioners bleed out. Examples of such surface conditioners include, but are not limited to, vinyl, acrylic, silicone, and fluorine-containing surface conditioners. The acrylic pressure-sensitive adhesive sheets are more advantageously applied to coatings on which silicone surface conditioners bleed out. This advantage is probably because the component (b) having a polyorganosiloxane structure contained in the pressure-sensitive adhesive layer (Y) has high affinity for the silicone bleeding components and helps the pressure-sensitive adhesive layer (Y) to absorb and disperse the bleeding components therein.

Examples of the coatings on which silicone surface conditioners bleed out include coatings having a surface with an elemental ratio of silicon of from 1% to 20% as determined through electron spectroscopy for chemical analysis (ESCA).

[Methods for Producing Acrylic Pressure-Sensitive Adhesive Sheets]

A method for producing the acrylic pressure-sensitive adhesive sheet according to the present invention is not especially limited, as long as being able to give an acrylic pressure-sensitive adhesive sheet at least structurally including an elastic layer (X) and, arranged on one or both sides thereof, a pressure-sensitive adhesive layer (Y). An exemplary

method is a method of forming a pressure-sensitive adhesive layer (Y) on at least one side of the elastic layer (X), which pressure-sensitive adhesive layer (Y) is prepared from the acrylic pressure-sensitive adhesive composition according to the present invention through the application of an active energy ray.

Exemplary processes of providing or arranging a pressure-sensitive adhesive layer (Y) on at least one side of an elastic layer (X) include a process of independently preparing an elastic layer (X) and a pressure-sensitive adhesive layer (Y), and affixing them with each other; a process of applying the acrylic pressure-sensitive adhesive composition to one or both sides of a previously prepared elastic layer (X) to form a layer of acrylic pressure-sensitive adhesive composition, and polymerizing the composition by the application of an active energy ray to give a pressure-sensitive adhesive layer (Y); and a process of applying a resin composition for the elastic layer (X) to one side of a previously prepared pressure-sensitive adhesive layer (Y) to give a layer of resin composition, and polymerizing the composition to give an elastic layer (X).

In a preferred embodiment, the sheet is produced by a method in which the elastic layer (X) and the pressure-sensitive adhesive layer (Y) are formed simultaneously by laying a layer of the acrylic pressure-sensitive adhesive composition on one or both sides of a layer of resin composition for the elastic layer (X) containing a photoinitiator to give a laminate; and applying an active energy ray to the laminate. This method can produce an acrylic pressure-sensitive adhesive sheet with satisfactory productivity, because the elastic layer (X) and pressure-sensitive adhesive layer (Y) are formed simultaneously. This method is also preferred in that the resulting acrylic pressure-sensitive adhesive sheet exhibits an improved bond strength, because the elastic layer (X) and the pressure-sensitive adhesive layer (Y) are integrated.

## EXAMPLES

The present invention will be illustrated in further detail with reference to several examples below. It should be noted, however, these examples are never construed to limit the scope of the present invention.

### EXAMPLE 1

(Synthesis of Co-oligomer (B1))

In a flask were placed 148.5 parts by weight of cyclohexyl methacrylate, 1.5 parts by weight of a mono-terminal modified silicone oil having a terminal methacryloyl group ("X-22-2426" supplied by Shin-Etsu Silicones (a division of Shin-Etsu Chemical Co., Ltd.)), 4.5 parts by weight of 2-mercaptoethanol, 0.3 part by weight of 2,2'-azobisisobutyronitrile (AIBN), and 154.5 parts by weight of toluene. The mixture was subjected to polymerization at 70°C for 2 hours, followed by aging at 80°C for 1 hour. Toluene was then distilled off from the reaction mixture, the residue was dried in a vacuum dryer and thereby yielded a co-oligomer (B1).
The co-oligomer (B1) has a weight-average molecular weight in terms of polystyrene of 4000 as determined by gel permeation chromatography (GPC) (hereinafter the same) and a glass transition temperature Tg (theoretical) of 64°C.

(Preparation of Alkyl (Meth)acrylate Partial Polymer (A1) (UV Syrup))

To a monomer mixture containing 90 parts by weight of 2-ethylhexyl acrylate and 10 parts by weight of acrylic acid, were added 0.05 part by weight of a photoinitiator (supplied under the trade name "Irgacure 651" by Ciba Specialty Chemicals Corporation) and 0.05 part by weight of another photoinitiator (supplied under the trade name "Irgacure 184" by Ciba Specialty Chemicals Corporation). The resulting mixture was irradiated with an ultraviolet ray to a viscosity of about 15 Pa.s, to thereby give a partial polymer (A1) whose monomer components had been partially polymerized. The viscosity was measured at a temperature of 30°C using a BH type viscometer with a No. 5 rotor rotated at 10 rpm.

(Preparation of Acrylic Pressure-Sensitive Adhesive Composition)

An acrylic pressure-sensitive adhesive composition was prepared by homogenously mixing 100 parts by weight of the above-prepared partial polymer (A1), 5 parts by weight of the co-oligomer (B1), and 0.08 part by weight of 1,6-hexanediol diacrylate.

(Production of Acrylic Pressure-Sensitive Adhesive Sheet (I))

The prepared acrylic pressure-sensitive adhesive composition was applied to a poly(ethylene terephthalate) (PET) film 38 μm thick using an applicator, so as to give a pressure-sensitive adhesive layer 50 μm thick. To block oxygen, the coating layer was covered by a poly(ethylene terephthalate) film (release film) 38 μm thick. One side of the

release film had been treated with a silicone to be releasable, and the film was arranged so that the treated surface faced the coating layer. Next, an ultraviolet ray was applied from the upper surface (release film surface) of the resulting sheet at an irradiance of 4 mW/$cm^2$ for 180 seconds using a black-light lamp. The irradiance was measured with an UV Checker "UVR-T1" supplied by Topcon Corporation, having a maximum sensitivity of about 350 nm.
The sheet was further subjected to a heat treatment in a drying oven at 130°C for 3 minutes to evaporate residual monomers and thereby yielded an acrylic pressure-sensitive adhesive sheet (I-a) with a PET film base.

(Production of Acrylic Pressure-Sensitive Adhesive Sheet (II))

The acrylic pressure-sensitive adhesive composition was applied to a poly(ethylene terephthalate) film 38 μm thick ("MRN #38" supplied by Mitsubishi Polyester Film GmbH (Mitsubishi Plastics, Inc.)) using an applicator so as to give a pressure-sensitive adhesive layer 50 μm thick. The poly(ethylene terephthalate) film had a release surface treated with a silicone, and the composition was applied to the release surface.
Next, to block oxygen, the coating surface was covered by a poly(ethylene terephthalate) film 38 μm thick ("MRF #38" supplied by Mitsubishi Polyester Film GmbH (Mitsubishi Plastics, Inc.)). The poly(ethylene terephthalate) film herein had a release surface treated with a silicone on one side thereof, and the coating surface was covered by the film so that the release surface faced the coating layer. Next, an ultraviolet ray was applied from one side of the resulting sheet at an irradiance of 4 mW/$cm^2$ for 180 seconds using a black-light lamp. The irradiance was measured with an UV Checker "UVR-T1" supplied by Topcon Corporation, having a maximum sensitivity of about 350 nm. The sheet was further subjected to a heat treatment in a drying oven at 130°C for 3 minutes to evaporate residual monomers.
The PET film "MRN #38" was removed from one side of the sheet, and the exposed adhesive face was applied to one side of an acrylic foam (double-faced tape) "HYPERJOINT Series A4008" supplied by Nitto Denko Corporation and thereby yielded an acrylic pressure-sensitive adhesive sheet (II-a) having an acrylic foam (elastic layer) base. The acrylic foam (A4008) had a polyolefin release liner on the opposite side to the pressure-sensitive adhesive layer.

EXAMPLE 2

An acrylic pressure-sensitive adhesive sheet (I-d) having a PET film base and an acrylic pressure-sensitive adhesive sheet (II-d) having an acrylic foam base were prepared by the procedure of Example 1, except that the copolymerizable oligomer (B1) was used in an amount of 10 parts by weight to prepare an acrylic pressure-sensitive adhesive composition.

COMPARATIVE EXAMPLE 1

An acrylic pressure-sensitive adhesive sheet (I-b) having a PET film base and an acrylic pressure-sensitive adhesive sheet (II-b) having an acrylic foam base were prepared by the procedure of Example 1, except for using no co-oligomer (B1).

COMPARATIVE EXAMPLE 2

A co-oligomer (B2) was prepared by the procedure of Example 1, except for using no silicone oil having a terminal methacryloyl group and for using cyclohexyl methacrylate in an amount of 150 parts by weight.
The co-oligomer (B2) has a weight-average molecular weight of 3700 in terms of polystyrene as determined by gel permeation chromatography (GPC) (hereinafter the same) and a glass transition temperature Tg (theoretical) of 66°C.
Next, an acrylic pressure-sensitive adhesive sheet (I-c) having a PET film base and an acrylic pressure-sensitive adhesive sheet (II-c) having an acrylic foam base were prepared by the procedure of Example 1, except for using the co-oligomer (B2) instead of the co-oligomer (B1)

COMPARATIVE EXAMPLE 3

A co-oligomer (B3) was prepared by the procedure of Example 1, except for using cyclohexyl acrylate in an amount of 142.5 parts by weight and the mono-terminal modified silicone oil having a terminal methacryloyl group in an amount of 7.5 parts by weight.
The co-oligomer has a weight-average molecular weight of 3900 and a glass transition temperature Tg (theoretical) of 56°C.
Next, an acrylic pressure-sensitive adhesive sheet (If) having a PET film base and an acrylic pressure-sensitive adhesive sheet (II-f) having an acrylic foam base were prepared by the procedure of Example 1, except for using the co-oligomer (B3) instead of the co-oligomer (B1)

Hereinafter the acrylic pressure-sensitive adhesive sheets (I-a), (I-b), (I-c), (I-d), and (I-f) each having a PET film base and prepared in the examples and comparative examples are also generically referred to as "acrylic pressure-sensitive adhesive sheet(s) (I)", and the acrylic pressure-sensitive adhesive sheets (II-a), (II-b), (II-c), (II-d), and (II-f) each having an acrylic foam base and prepared in the examples and comparative examples are also generically referred to as "acrylic pressure-sensitive adhesive sheet(s) (II)".

[Measurements of Properties and Evaluations of Effects]

Methods for measuring properties and methods for evaluating effects employed herein will be illustrated below.

(1) Measurement of Adhesive Strength

[Adhesive Strength of Acrylic Pressure-Sensitive Adhesive Sheets (I)]

Strip samples 25 mm wide for measurements were cut from the acrylic pressure-sensitive adhesive sheets (I) prepared in the examples and comparative examples. The measurements were performed after removing the release film from the samples. The pressure-sensitive adhesive layer of each sample acrylic pressure-sensitive adhesive sheet was affixed to an unwashed automotive coating and to a washed automotive coating as mentioned blow through one reciprocating movement of a 2-kg robber roll (30 mm wide) and thereby yielded coated plates bearing acrylic pressure-sensitive adhesive sheets (I). The washing of the automotive coating had been performed by rubbing the automotive coating with a clean cloth impregnated with isopropyl alcohol (IPA) through ten reciprocating movements. The coated plates bearing pressure-sensitive adhesive sheets (I) were left stand in an atmosphere at a temperature of 23°C and relative humidity of 50% for 4 days.
The peel tests of the pressure-sensitive adhesive sheets (I) were performed as 180-degree peel at a tensile speed of 300 mm/minute with a sample width of 25 mm, and averages of adhesive strengths (peel stresses) at peel lengths of from 10 to 50 mm were measured. The measured average adhesive strength to the unwashed coating was defied as an adhesive strength (A), and that to the washed coating was defined as an adhesive strength (B).
The coated plates bearing acrylic pressure-sensitive adhesive sheets (I) are models typically for coated plates to which pressure-sensitive adhesive sheets are applied for the protection of coatings.

[Adhesive Strength of Acrylic Pressure-Sensitive Adhesive Sheets (II)]

Strip samples 25 mm wide for measurements were cut from the acrylic pressure-sensitive adhesive sheets (II) prepared in the examples and comparative examples.
The polyolefin release liner of the acrylic foam base (A4008) was removed from each of the acrylic pressure-sensitive adhesive sheets (II), and the resulting exposed adhesive face (adhesive face other than the pressure-sensitive adhesives prepared in the examples and comparative examples) was affixed to a PET film 50 μm thick as a base for the measurement of adhesive strength to give test samples.
The PET film "MRF #38" was removed from the pressure-sensitive adhesive layer each prepared in the examples and comparative examples of the test samples, and the exposed adhesive face (adhesive face of each of the adhesive layers prepared in the examples and comparative examples) was affixed to an unwashed automotive coating mentioned below by compression bonding through one reciprocating movement of a 5-kg rubber roll (65 mm wide) and thereby yielded coated plates bearing acrylic pressure-sensitive adhesive sheets (II). The coated plates bearing acrylic pressure-sensitive adhesive sheets (II) were left stand in an atmosphere at a temperature of 23°C and relative humidity of 50% for 4 days.
The peel tests of the pressure-sensitive adhesive sheets (II) were performed as 180-degree peel at a tensile speed of 50 mm/minute with a sample width of 25 mm, and a ten-point average of peaks at peel lengths of from 10 to 50 mm in an adhesive strength (peel stress) curve was determined, and this was defined as an adhesive strength (C) to unwashed coating.
The "ten-point average of peaks at peel lengths of from 10 to 50 mm in an adhesive strength (peel stress) curve" was determined by calculation in the following manner. Initially, a peel stress curve (in the form of waves) was plotted based on data measured in the peel test; of peaks (hereinafter the term "peaks" refers to crests of plural waves) at peel lengths ranging from 10 to 50 mm (calculation range) in the peel stress curve, the first and last peaks within the calculation range were excluded, and the highest peak was further excluded; and peak values at ten points in descending order from higher peel stress out of the residual peaks were averaged to give the "ten-point average of peaks at peel lengths of from 10 to 50 mm in an adhesive strength (peel stress) curve".
The coated plates bearing acrylic pressure-sensitive adhesive sheets (II) are models typically for coated plates to which adhesive sheets for bonding external parts are applied.
Each measurement was repeated three times (N=3), and the measured value was indicated as the average

of three measurements.

[Automotive Coatings]

The automotive coating was prepared by applying in order an electrodeposition paint, an intermediate paint, and a metallic paint to a stainless steel plate, and further applying thereto an acid-rain-resistant clear coating to a thickness of 50 μm. The acid-rain-resistant clear coating is an acrylic/styrenic coating without using melamine crosslinking agents but containing a silicone surface conditioner.
The coating without washing (unwashed coating) had a ratio of silicon element of 1.2%, whereas the coating after washing (washed coating) had a ratio of silicon element of 0%.

(2) Bond Factor

A bond factor (%) was calculated from the adhesive strength (A) to unwashed coating and the adhesive strength (B) to washed coating each measured in the measurement (1) of adhesive strength of the acrylic pressure-sensitive adhesive sheet (I), according to the following equation:

$$\text{Bonding ratio (\%)} = \text{(Adhesive strength (A) to unwashed coating)/(Adhesive strength (B) to washed coating)} \times 100$$

(3) Silicon Content (%) (measured by ESCA)

The elemental ratio of silicon in a surface layer of the adherend coated plate was measured in the following manner. Initially, the surface layer was qualitatively analyzed to detect elements, through wide-scanning measurement using an electron spectroscopy system for chemical analysis "model 5400" supplied by ULVAC-PHI, Inc. The measurement was performed using an X-ray source of magnesium Kα ray (300 W, 15 kV) at a take-off angle of photoelectron of 45° in an analyzed area of 1.1 mm in diameter. The detected elements were subjected to narrow-scanning measurements, and the elemental ratio of silicon was determined.
The data obtained in evaluations of the examples and comparative examples are shown in Table 1.
[Table 1]

TABLE 1

| | Oligomer | Silicone oil content in oligomer [percent by weight] | Amount of oligomer per 100 parts by weight of partial polymer (A1) [parts by weight] | Pressure-sensitive adhesive sheet (I) (PET film base) | | | Pressure-sensitive adhesive sheet (II) (elastic base) |
|---|---|---|---|---|---|---|---|
| | | | | Adhesive strength [N/25 mm] | | Bond factor (%) | Adhesive strength [N/25 mm] |
| | | | | Unwashed coating (A) | Washed coating (B) | A/B | Unwashed coating (C) |
| Example 1 | present | 1.0 | 5 | 12.8 | 14.3 | 89.2 | 27.0 |
| Example 2 | present | 1.0 | 10 | 15.6 | 17.2 | 91.0 | 36.5 |
| Com. Ex. 1 | absent | - | - | 9.3 | 13.1 | 71.0 | 20.5 |
| Com. Ex. 2 | present | 0 | 5 | 10.9 | 14.9 | 73.1 | 24.0 |
| Com. Ex. 3 | present | 5.0 | 5 | 7.8 | 9.6 | 80.7 | 14.4 |

Table 1 demonstrates that the acrylic pressure-sensitive adhesive sheets according to the present invention (Examples) exhibited superior adhesive strength and bond factor even to hard-to-adhere automotive coatings regardless of with or without washing. In contrast, the pressure-sensitive adhesive sheets not satisfying conditions as specified in

the present invention (Comparative Examples) showed significantly low adhesive strength to the unwashed coating on which surface the silicone surface conditioner bled out. The higher the bond factor is, the better. This is because a pressure-sensitive adhesive sheet having such a high bond factor can maintain a high adhesive strength stably regardless of the surface condition of the adherend coating and without being affected by the surface conditioner.
When a layer of each the pressure-sensitive adhesives according to the present invention was provided on an elastic layer (X) (acrylic foam layer) as a base, the resulting sheets also exhibited highest adhesive strengths to the unwashed coating among the samples.

Industrial Applicability

The acrylic pressure-sensitive adhesive compositions according to the present invention can form pressure-sensitive adhesive layers that exhibit superior adhesive strength even to acid-rain-resistant coatings and develop superior adhesive strength even to coatings on which surface a silicone surface conditioner bleeds out. They are usable as pressure-sensitive adhesive compositions that are curable by the application of active energy rays and are used as pressure-sensitive adhesive layers of pressure-sensitive adhesive sheets to be applied to automotive coatings. The acrylic pressure-sensitive adhesive sheets according to the present invention use the acrylic pressure-sensitive adhesive compositions. They adhere to automotive coatings by the methods according to the present invention.

## Claims

1. An acrylic pressure-sensitive adhesive composition comprising a vinyl monomer or a partial polymer thereof (a); and a (meth)acrylate co-oligomer (b), wherein the vinyl monomer contains, as a main component, an alkyl (meth) acrylate monomer (a1) having an alkyl group with 2 to 14 carbon atoms, and the (meth)acrylate co-oligomer (b) has a weight-average molecular weight of from 1000 to 30000 and contains, as monomer components, 96 to 99.5 percent by weight of an alkyl (meth)acrylate (b1) and 0.1 to 4 percent by weight of a (meth)acryloyl group-containing silicone oil (b2).

2. The acrylic pressure-sensitive adhesive composition according to claim 1, wherein the composition comprises 5 to 40 parts by weight of the (meth)acrylate co-oligomer (b) per 100 parts by weight of the vinyl monomer or a partial polymer thereof (a).

3. The acrylic pressure-sensitive adhesive composition according to claim 1, wherein the (meth)acrylate co-oligomer (b) has a glass transition temperature (Tg) of from 40°C to 150°C.

4. The acrylic pressure-sensitive adhesive composition according to claim 1, wherein the composition further comprises 0.001 to 5 parts by weight of a photoinitiator (c) per 100 parts by weight of the vinyl monomer or a partial polymer thereof (a) and is curable by the action of an active energy ray.

5. The acrylic pressure-sensitive adhesive composition according to claim 1, wherein the composition further comprises 0.001 to 30 parts by weight of a multifunctional (meth)acrylate (d) per 100 parts by weight of the vinyl monomer or a partial polymer thereof (a).

6. An acrylic pressure-sensitive adhesive sheet comprising an elastic layer (X); and, arranged on or above at least one side thereof, an acrylic pressure-sensitive adhesive layer (Y), wherein the elastic layer (X) contains hollow microspheres, and the acrylic pressure-sensitive adhesive layer (Y) is made from the acrylic pressure-sensitive adhesive composition of claim 1.

7. The acrylic pressure-sensitive adhesive sheet according to claim 6, wherein the acrylic pressure-sensitive adhesive layer (Y) is a cured product of the acrylic pressure-sensitive adhesive composition cured by the action of an active energy ray.

8. The acrylic pressure-sensitive adhesive sheet according to claim 6, to be applied to an automotive coating.

9. A method for bonding a pressure-sensitive adhesive sheet to an automotive coating, the method comprising the step of applying the acrylic pressure-sensitive adhesive sheet of claim 8 to a surface of the automotive coating wherein a silicone surface conditioner bleeds out to the surface.

**10.** A method for uniting an article to an automotive coating, the method comprising the step of affixing the article to a surface of the automotive coating through the acrylic pressure-sensitive adhesive sheet of claim 8, wherein a silicone surface conditioner bleeds out to the surface.

**11.** A method for bonding a pressure-sensitive adhesive sheet to an automotive coating, the method comprising the step of affixing the acrylic pressure-sensitive adhesive sheet of claim 8 to a surface of the automotive coating, wherein the surface has an elemental ratio of silicon of from 1% to 20% as determined by electron spectroscopy for chemical analysis (ESCA).

**12.** A method for uniting an article to an automotive coating, the method comprising the step of affixing the article to a surface of the automotive coating through the acrylic pressure-sensitive adhesive sheet of claim 8, wherein the surface has an elemental ratio of silicon of from 1% to 20% as determined by electron spectroscopy for chemical analysis (ESCA).

**INTERNATIONAL SEARCH REPORT**

International application No.
PCT/JP2008/057360

A. CLASSIFICATION OF SUBJECT MATTER
*C09J4/02*(2006.01)i, *B29C65/50*(2006.01)i, *B32B27/00*(2006.01)i, *C09J5/00*(2006.01)i, *C09J7/02*(2006.01)i, *C09J11/06*(2006.01)i

According to International Patent Classification (IPC) or to both national classification and IPC

B. FIELDS SEARCHED

Minimum documentation searched (classification system followed by classification symbols)
C09J1/00-201/10, B29C65/50, B32B27/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 03-006277 A (Kanzaki Paper Mfg. Co., Ltd.), 11 January, 1991 (11.01.91), Claims; page 2, lower left column, line 5 to page 3, lower left column, line 20; examples (Family: none) | 1-5 |
| A | JP 2005-200606 A (Nitto Denko Corp.), 28 July, 2005 (28.07.05), Claims; Par. Nos. [0024] to [0035]; examples (Family: none) | 1-12 |
| A | JP 2001-106998 A (Somar Corp.), 17 April, 2001 (17.04.01), Claims; Par. Nos. [0010] to [0031]; examples (Family: none) | 1-12 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 June, 2008 (27.06.08) | Date of mailing of the international search report<br>08 July, 2008 (08.07.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/057360

C (Continuation). DOCUMENTS CONSIDERED TO BE RELEVANT

| Category* | Citation of document, with indication, where appropriate, of the relevant passages | Relevant to claim No. |
|---|---|---|
| A | JP 08-199139 A (The Nippon Synthetic Chemical Industry Co., Ltd.), 06 August, 1996 (06.08.96), Claims; examples (Family: none) | 1-12 |
| A | JP 63-291972 A (Nitto Denko Corp.), 29 November, 1988 (29.11.88), Claims; examples (Family: none) | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5717030 B
- JP 2001049200 A
- JP 2000248241 A
- JP H06108001 A
- JP 2002241698 A
- JP 2003226834 A